# EUROPEAN PATENT APPLICATION

(11) **EP 4 580 270 A1**
(43) Date of publication of application: **02.07.2025**
(21) Application number: 23869670.2
(22) Date of filing: 26.05.2023
(51) Int. Cl.: H04W 60/00, H04W 12/06

(54) **METHOD FOR MANAGING TAG STATE, AND COMMUNICATION APPARATUS**

(30) Priority: 26.09.2022 CN 202211174355
(71) Applicant: Huawei Technologies Co., Ltd., Shenzhen, Guangdong 518129 (CN)
(72) Inventor: LIAO, Ting, Shenzhen, Guangdong 518129 (CN); ZONG, Zaifeng, Shenzhen, Guangdong 518129 (CN); SHU, Lin, Shenzhen, Guangdong 518129 (CN); ZHOU, Xiaoyun, Shenzhen, Guangdong 518129 (CN); ZHENG, Xiaochun, Shenzhen, Guangdong 518129 (CN)
(74) Representative: MERH-IP Matias Erny Reichl Hoffmann Patentanwälte PartG mbB
(86) International application number: PCT/CN2023/096564
(87) International publication number: WO 2024/066417

(57) **Abstract**

This application provides a tag state management method and a communication apparatus. The method includes: A first tag receives a first message from an access network device, where the first message is used to request to inventory a to-be-inventoried tag, and the first tag belongs to the to-be-inventoried tag. The first tag accesses the access network device. The first tag sends a second message, where the second message is used to request registration with a core network device. The first tag switches from a deregistered state to a registered state after sending the second message. According to the method, after the second message is sent, a state of the first tag is switched from the deregistered state to the registered state, to properly manage the state of the tag in a scenario in which the tag is inventoried by using an air interface wireless technology.

## Description

This application claims priority to Chinese Patent Application No. 202211174355.3, filed with the China National Intellectual Property Administration on September 26, 2022 and entitled "TAG STATE MANAGEMENT METHOD AND COMMUNICATION APPARATUS", which is incorporated herein by reference in its entirety.

### TECHNICAL FIELD

Embodiments of this application relate to the communication field, and more specifically, to a tag state management method and a communication apparatus.

### BACKGROUND

With development of technologies and environmental protection requirements, the passive internet of things has a prospect of larger-scale application and deployment, and it is predicted that hundreds of billions of devices will be covered in the future. However, a tag (for example, a passive tag or a semi-passive tag) in the passive internet of things has a simple function, and usually needs to rely on external excitation to send information externally. The external excitation is usually from a reader/writer. Currently, the passive internet of things has features such as a short communication distance between a card reader and the tag, and a complex implementation of a state of the tag. This limits deployment of the passive internet of things.

For the features, in a solution, an inventory capability (including operations such as reading, writing, killing, and locking on a tag) of the reader/writer is integrated into an access network device, so that the tag in the passive internet of things is excited and then inventoried by using an air interface wireless technology, to increase the communication distance between the tag in the passive internet of things and the card reader, and perform unified management on tags in the passive internet of things through the access network device.

However, how to manage the state of the tag in a scenario in which the tag in the passive internet of things is inventoried by using the air interface wireless technology is not specified.

### SUMMARY

This application provides a tag state management method and a communication apparatus, to manage a state of a tag in a scenario in which the tag is inventoried by using an air interface wireless technology.

According to a first aspect, a tag state management method is provided. The method may be performed by a first tag, or may be performed by a module or a unit in the first tag. For ease of description, the module or the unit in the first tag is collectively referred to as the first tag in the following.

The method includes: The first tag receives a first message from an access network device, where the first message is used to request to inventory a to-be-inventoried tag, and the first tag belongs to the to-be-inventoried tag. The first tag accesses the access network device. The first tag sends a second message, where the second message is used to request registration with a core network device. The first tag switches from a deregistered state to a registered state after sending the second message.

There may be one or more to-be-inventoried tags.

The method may alternatively be described as follows: The first tag receives a first message from an access network device, where the first message is used to request to inventory the first tag. The first tag accesses the access network device. The first tag sends a second message, where the second message is used to request registration with a core network device. The first tag switches from a deregistered state to a registered state after sending the second message.

Optionally, the first message includes a select command, where the select command is used to select one or more to-be-inventoried tags, and the select command may include a condition that needs to be met by a tag. After receiving the first message, the first tag determines whether the first tag meets the condition in the select command, and when the first tag meets the condition in the select command, the first tag learns that the first tag is to be inventoried.

According to the method, after the second message used to request registration with the core network device is sent, a state of the first tag is switched from the deregistered state to the registered state, to properly manage the state of the tag in a scenario in which the tag is inventoried by using an air interface wireless technology. **In** addition, in comparison with complex state change in a conventional technology, simplification of the state of the tag to the registered state and the deregistered state helps simplify management of the state of the tag.

With reference to the first aspect, in a possible implementation, the first message is further used to excite the to-be-inventoried tag.

For example, when the to-be-inventoried tag is a passive tag or a semi-passive tag, the first message may be further used to excite the to-be-inventoried tag.

With reference to the first aspect or any implementation thereof, in another possible implementation, after that the first tag sends a second message, the method further includes: The first tag receives a third message, where the third message indicates that the first tag is successfully registered with the core network device. That the first tag switches from a deregistered state to a registered state after sending the second message includes: The first tag switches from the deregistered state to the registered state after receiving the third message.

**In** other words, the third message after the second message triggers the first tag to switch from the deregistered state to the registered state.

According to the method, when the first tag is successfully registered, a state of the first tag is switched from the deregistered state to the registered state, to properly manage the state of the tag in a scenario in which the tag is inventoried by using an air interface wireless technology.

With reference to the first aspect or any implementation thereof, in another possible implementation, after that the first tag sends a second message, the method further includes: The first tag sends a fourth message, where the fourth message is used to request to perform authentication on the first tag. The first tag receives a fifth message, where the fifth message indicates that the authentication on the first tag succeeds. That the first tag switches from a deregistered state to a registered state after sending the second message includes: The first tag switches from the deregistered state to the registered state after receiving the fifth message.

**In** other words, the fifth message after the second message triggers the first tag to switch from the deregistered state to the registered state.

According to the method, when the authentication on the first tag succeeds, a state of the first tag is switched from the deregistered state to the registered state, to properly manage the state of the tag in a scenario in which the tag is inventoried by using an air interface wireless technology.

With reference to the first aspect or any implementation thereof, in another possible implementation, after that the first tag sends a second message, the method further includes: The first tag receives a sixth message, where the sixth message is used to request the first tag to perform authentication on an authentication server. The first tag sends a seventh message when the authentication on the authentication server succeeds, where the seventh message indicates that the authentication on the authentication server succeeds. That the first tag switches from a deregistered state to a registered state after sending the second message includes: The first tag switches from the deregistered state to the registered state after sending the seventh message.

In other words, the seventh message after the second message triggers the first tag to switch from the deregistered state to the registered state.

According to the method, when the authentication on the authentication server corresponding to the first tag succeeds, a state of the first tag is switched from the deregistered state to the registered state, to properly manage the state of the tag in a scenario in which the tag is inventoried by using an air interface wireless technology.

With reference to the first aspect or any implementation thereof, in another possible implementation, the method further includes: The first tag starts a first timer. The first tag switches from the registered state to the deregistered state when the first timer expires.

According to the method, the registered state of the first tag can be maintained through the timer, to properly manage a state of the tag in a scenario in which the tag is inventoried by using an air interface wireless technology.

With reference to the first aspect or any implementation thereof, in another possible implementation, the method further includes: The first tag in the registered state resets the first timer based on a message between the first tag and the core network device.

With reference to the first aspect or any implementation thereof, in another possible implementation, the method further includes: The first tag in the registered state receives an eighth message, where the eighth message indicates to inventory a next tag. The first tag switches from the registered state to the deregistered state based on the eighth message.

According to the method, when inventory on the first tag ends, a state of the first tag is switched from the deregistered state to the registered state, to properly manage the state of the tag in a scenario in which the tag is inventoried by using an air interface wireless technology.

With reference to the first aspect or any implementation thereof, in another possible implementation, a packet header of at least one of the second message, the third message, the fourth message, the fifth message, the sixth message, or the seventh message includes a protocol identification code, and a length of the packet header is one byte.

According to the method, a packet header of a message between the first tag and the core network device occupies one byte, and one byte is reduced in comparison with a two-byte packet header of an existing common non-access stratum (non-access stratum, NAS) message. This helps implement inventory on a tag by using an air interface wireless technology.

With reference to the first aspect or any implementation thereof, in another possible implementation, a packet header of at least one of the second message, the third message, the fourth message, the fifth message, the sixth message, or the seventh message includes a protocol identification code and a security header type, and a sum of a length of the protocol identification code and a length of the security header type is one byte.

According to the method, a sum of a length of a protocol identification code and a length of a security header type in a packet header of a message between the first tag and the core network device is one byte, and one byte is reduced in comparison two bytes in an existing common NAS message. This helps implement inventory on a tag by using an air interface wireless technology.

With reference to the first aspect or any implementation thereof, in another possible implementation, when the security header type indicates to perform security protection, the packet header further includes a message authentication code and a sequence number.

According to a second aspect, a tag state management method is provided. The method may be performed by a core network device, or may be performed by a module or a unit in the core network device. For ease of description, the module or the unit in the core network device is collectively referred to as the core network device in the following.

The method includes: The core network device receives a first request message used to request to inventory a to-be-inventoried tag. The core network device sends, through an access network device, a first message to the to-be-inventoried tag, where the first message is used to request to inventory the to-be-inventoried tag. The core network device receives a second message from a first tag in the to-be-inventoried tag, where the second message is used to request registration with the core network device. The core network device switches, after receiving the second message, a state of the first tag stored in the core network device from a deregistered state to a registered state.

The method may alternatively be described as follows: The core network device receives a first request message used to request to inventory a to-be-inventoried tag, where the to-be-inventoried tag includes a first tag. The core network device sends, through an access network device, a first message to the first tag, where the first message is used to request to inventory the first tag. The core network device receives a second message from a first tag, where the second message is used to request registration with the core network device. The core network device switches, after receiving the second message, a state of the first tag stored in the core network device from a deregistered state to a registered state.

With reference to the second aspect, in a possible implementation, the first message is further used to excite the to-be-inventoried tag.

For example, when the to-be-inventoried tag is a passive tag or a semi-passive tag, the first message may be further used to excite the to-be-inventoried tag.

With reference to the second aspect, in a possible implementation, after the second message is received, the method further includes: The core network device sends a third message to the first tag, where the third message indicates that the first tag is successfully registered with the core network device. That the core network device switches, after receiving the second message, a state of the first tag stored in the core network device from a deregistered state to a registered state includes: The core network device switches, after sending the third message, the state of the first tag stored in the core network device from the deregistered state to the registered state.

With reference to the second aspect or any implementation thereof, in another possible implementation, after the second message is received, the method further includes: The core network device receives a fourth message from the first tag, where the fourth message is used to request to perform authentication on the first tag. The core network device sends a fifth message to the first tag, where the fifth message indicates that the authentication on the first tag succeeds. That the core network device switches, after receiving the second message, a state of the first tag stored in the core network device from a deregistered state to a registered state includes: The core network device switches, after sending the fifth message, the state of the first tag stored in the core network device from the deregistered state to the registered state.

With reference to the second aspect or any implementation thereof, in another possible implementation, after the second message is received, the method further includes: The core network device sends a sixth message to the first tag, where the sixth message is used to request to perform authentication on an authentication server. The core network device receives a seventh message from the first tag, where the seventh message indicates that the authentication on the authentication server succeeds. That the core network device switches, after receiving the second message, a state of the first tag stored in the core network device from a deregistered state to a registered state includes: The core network device switches, after receiving the seventh message, the state of the first tag stored in the core network device from the deregistered state to the registered state.

With reference to the second aspect or any implementation thereof, in another possible implementation, the method further includes: The core network device starts a second timer when the state of the first tag is switched from the deregistered state to the registered state. When the second timer expires, the core network device switches the state of the first tag stored in the core network device from the registered state to the deregistered state.

With reference to the second aspect or any implementation thereof, in another possible implementation, the method further includes: The core network device resets the second timer based on a message between the first tag and the core network device.

With reference to the second aspect or any implementation thereof, in another possible implementation, the method further includes: When inventory on the first tag ends, the core network device switches the state of the first tag stored in the core network device from the registered state to the deregistered state.

With reference to the second aspect or any implementation thereof, in another possible implementation, the method further includes: The core network device sends a ninth message to the access network device, where the ninth message indicates that the inventory on the first tag ends.

With reference to the second aspect or any implementation thereof, in another possible implementation, the method further includes: The core network device allocates a first identifier to the first tag after receiving the second message. The core network device sends a correspondence between the first identifier and the first tag to the access network device.

With reference to the second aspect or any implementation thereof, in another possible implementation, the method further includes: The core network device receives a correspondence between a second identifier from the access network device and the first tag.

With reference to the second aspect or any implementation thereof, in another possible implementation, the method further includes: When the state of the first tag is switched from the registered state to the deregistered state, the core network device releases the correspondence between the first identifier and the first tag and/or the correspondence between the second identifier and the first tag.

Based on the foregoing method, when the state of the first tag is switched from the registered state to the deregistered state, an identifier used for transmission of a message of the first tag between the access network device and the core network device can be released. This helps properly use network resources.

With reference to the second aspect or any implementation thereof, in another possible implementation, a packet header of at least one of the second message, the third message, the fourth message, the fifth message, the sixth message, or the seventh message includes a protocol identification code, and a length of the packet header is one byte.

With reference to the second aspect or any implementation thereof, in another possible implementation, a packet header of at least one of the second message, the third message, the fourth message, the fifth message, the sixth message, or the seventh message includes a protocol identification code and a security header type, and a sum of a length of the protocol identification code and a length of the security header type is one byte.

With reference to the second aspect or any implementation thereof, in another possible implementation, when the security header type indicates to perform security protection, the packet header further includes a message authentication code and a sequence number.

According to a third aspect, a tag state management method is provided. The method may be performed by an access network device, or may be performed by a module or a unit in the access network device. For ease of description, the module or the unit in the access network device is collectively referred to as the access network device in the following.

The method includes: The access network device receives a second request message used to request to inventory a to-be-inventoried tag. The access network device sends a first message to the to-be-inventoried tag based on the second request message, where the first message is used to request to inventory the to-be-inventoried tag. After a first tag in the to-be-inventoried tag accesses the access network device, the access network device receives a second message from the first tag, where the second message is used to request registration with the core network device. The access network device sends the second message to the core network device.

The method may alternatively be described as follows: The access network device receives a second request message used to request to inventory a to-be-inventoried tag, where the to-be-inventoried tag includes a first tag. The access network device sends a first message to the first tag based on the second request message, where the first message is used to request to inventory the first tag. After the first tag accesses the access network device, the access network device receives a second message from the first tag, where the second message is used to request registration with the core network device. The access network device sends the second message to the core network device.

With reference to the third aspect, in a possible implementation, the first message is further used to excite the to-be-inventoried tag.

With reference to the third aspect or any implementation thereof, in another possible implementation, the method further includes: The access network device allocates a second identifier to the first tag based on the second message, and the access network device sends a correspondence between the second identifier and the first tag to the core network device; and/or the access network device receives a correspondence between a first identifier from the core network device and the first tag.

With reference to the third aspect or any implementation thereof, in another possible implementation, the method further includes: The access network device starts a third timer. When the third timer expires, the access network device releases the correspondence between the first identifier and the first tag and/or the correspondence between the second identifier and the first tag.

With reference to the third aspect or any implementation thereof, in another possible implementation, the method further includes: The access network device resets the third timer based on a message between the first tag and the core network device.

With reference to the third aspect or any implementation thereof, in another possible implementation, the method further includes: The access network device receives a ninth message from the core network device, where the ninth message indicates that the inventory on the first tag ends. The access network device releases, based on the ninth message, the correspondence between the first identifier and the first tag and/or the correspondence between the second identifier and the first tag.

With reference to the third aspect or any implementation thereof, in another possible implementation, the method further includes: The access network device sends an eighth message to the first tag, where the eighth message indicates to inventory a next tag.

With reference to the third aspect or any implementation thereof, in another possible implementation, a packet header of the second message includes a protocol identification code, and a length of the packet header is one byte.

With reference to the third aspect or any implementation thereof, in another possible implementation, a packet header of the second message includes a protocol identification code and a security header type, and a sum of a length of the protocol identification code and a length of the security header type is one byte.

With reference to the third aspect or any implementation thereof, in another possible implementation, when the security header type indicates to perform security protection, the packet header further includes a message authentication code and a sequence number.

According to a fourth aspect, a tag state management method is provided. The method may be performed by an access network device and a core network device, or may be performed by modules or units in the access network device and the core network device. For ease of description, the modules or the units in the access network device and the core network device are collectively referred to as the access network device and the core network device in the following. For technical effects of the method in the fourth aspect and possible implementations thereof, refer to the second aspect and the possible implementations thereof. Details are not described below again.

The method includes: The core network device receives a first request message used to request to inventory a to-be-inventoried tag. The core network device sends, to the access network device, a second request message used to request to inventory the to-be-inventoried tag. The access network device sends a first message to the to-be-inventoried tag based on the second request message, where the first message is used to request to inventory the to-be-inventoried tag. After a first tag in the to-be-inventoried tag accesses the access network device, the access network device receives a second message from the first tag, where the second message is used to request registration with the core network device. The access network device sends the second message to the core network device. The core network device switches, after receiving the second message, a state of the first tag stored in the core network device from a deregistered state to a registered state.

The method may alternatively be described as follows: The core network device receives a first request message used to request to inventory a to-be-inventoried tag, where the to-be-inventoried tag includes a first tag. The core network device sends, to the access network device, a second request message used to request to inventory the to-be-inventoried tag. The access network device sends a first message to the first tag based on the second request message, where the first message is used to request to inventory the first tag. After the first tag accesses the access network device, the access network device receives a second message from the first tag, where the second message is used to request registration with the core network device. The access network device sends the second message to the core network device. The core network device switches, after receiving the second message, a state of the first tag stored in the core network device from a deregistered state to a registered state.

With reference to the fourth aspect, in a possible implementation, the first message is further used to excite the to-be-inventoried tag.

With reference to the fourth aspect or any implementation thereof, in another possible implementation, after the second message is received, the method further includes: The core network device sends a third message to the first tag through the access network device, where the third message indicates that the first tag is successfully registered with the core network device. That the core network device switches, after receiving the second message, a state of the first tag stored in the core network device from a deregistered state to a registered state includes: The core network device switches, after sending the third message, the state of the first tag stored in the core network device from the deregistered state to the registered state.

With reference to the fourth aspect or any implementation thereof, in another possible implementation, after the second message is received, the method further includes: The core network device receives a fourth message from the first tag, where the fourth message is used to request to perform authentication on the first tag. The core network device sends a fifth message to the first tag, where the fifth message indicates that the authentication on the first tag succeeds. That the core network device switches, after receiving the second message, a state of the first tag stored in the core network device from a deregistered state to a registered state includes: The core network device switches, after sending the fifth message, the state of the first tag stored in the core network device from the deregistered state to the registered state.

With reference to the fourth aspect or any implementation thereof, in another possible implementation, after the second message is received, the method further includes: The core network device sends a sixth message to the first tag, where the sixth message is used to request to perform authentication on an authentication server. The core network device receives a seventh message from the first tag, where the seventh message indicates that the authentication on the authentication server succeeds. That the core network device switches, after receiving the second message, a state of the first tag stored in the core network device from a deregistered state to a registered state includes: The core network device switches, after receiving the seventh message, the state of the first tag stored in the core network device from the deregistered state to the registered state.

With reference to the fourth aspect or any implementation thereof, in another possible implementation, the method further includes: When inventory on the first tag ends, the core network device switches the state of the first tag stored in the core network device from the registered state to the deregistered state.

With reference to the fourth aspect or any implementation thereof, in another possible implementation, the method further includes: The core network device allocates a first identifier to the first tag after receiving the second message. The core network device sends a correspondence between the first identifier and the first tag to the access network device.

With reference to the fourth aspect or any implementation thereof, in another possible implementation, the method further includes: The access network device allocates a second identifier to the first tag based on the second message, and the access network device sends a correspondence between the second identifier and the first tag to the core network device.

With reference to the fourth aspect or any implementation thereof, in another possible implementation, the method further includes: When the state of the first tag is switched from the registered state to the deregistered state, the core network device releases the correspondence between the first identifier and the first tag and/or the correspondence between the second identifier and the first tag.

With reference to the fourth aspect or any implementation thereof, in another possible implementation, the method further includes: The core network device sends a ninth message to the access network device, where the ninth message indicates that the inventory on the first tag ends. The access network device releases, based on the ninth message, the correspondence between the first identifier and the first tag and/or the correspondence between the second identifier and the first tag.

With reference to the fourth aspect or any implementation thereof, in another possible implementation, the method further includes: The access network device sends an eighth message to the first tag, where the eighth message indicates to inventory a next tag.

With reference to the fourth aspect or any implementation thereof, in another possible implementation, a packet header of at least one of the second message, the third message, the fourth message, the fifth message, the sixth message, or the seventh message includes a protocol identification code, and a length of the packet header is one byte.

With reference to the fourth aspect or any implementation thereof, in another possible implementation, a packet header of at least one of the second message, the third message, the fourth message, the fifth message, the sixth message, or the seventh message includes a protocol identification code and a security header type, and a sum of a length of the protocol identification code and a length of the security header type is one byte.

With reference to the fourth aspect or any implementation thereof, in another possible implementation, when the security header type indicates to perform security protection, the packet header further includes a message authentication code and a sequence number.

For technical effects of the method in the second aspect to the fourth aspect and possible implementations thereof, refer to the first aspect and the possible implementations thereof. Details are not described again.

According to a fifth aspect, a tag inventory method is provided. The method may be performed by a first tag, or may be performed by a module or a unit in the first tag. For ease of description, the module or the unit in the first tag is collectively referred to as the first tag in the following.

The method includes: The first tag receives a first message from an access network device, where the first message is used to request to inventory a to-be-inventoried tag, and the first tag belongs to the to-be-inventoried tag. The first tag accesses the access network device. The first tag receives a quick inventory command from the access network device. The first tag sends an identifier of the first tag to the access network device based on the quick inventory command.

There may be one or more to-be-inventoried tags.

The method may alternatively be described as follows: The first tag receives a first message from an access network device, where the first message is used to request to inventory the first tag. The first tag accesses the access network device. The first tag receives a quick inventory command from the access network device. The first tag sends an identifier of the first tag to the access network device based on the quick inventory command.

Optionally, the first message includes a select command, where the select command is used to select one or more to-be-inventoried tags, and the select command may include a condition that needs to be met by a tag. After receiving the first message, the first tag determines whether the first tag meets the condition in the select command, and when the first tag meets the condition in the select command, the first tag learns that the first tag is to be inventoried.

According to the method, quick inventory on a tag can be implemented. During quick inventory on the tag, the access network device performs inventory on the tag and feeds back the tag to the core network device in a unified manner. The first tag and the core network device may not need to switch a state of the first tag between a registered state and a deregistered state as described in the first aspect to the fourth aspect.

With reference to the fifth aspect, in a possible implementation, the first message is further used to excite the to-be-inventoried tag.

For example, when the to-be-inventoried tag is a passive tag or a semi-passive tag, the first message may be further used to excite the to-be-inventoried tag.

According to a sixth aspect, a tag inventory method is provided. The method may be performed by a core network device, or may be performed by a module or a unit in the core network device. For ease of description, the module or the unit in the core network device is collectively referred to as the core network device in the following.

The method includes: The core network device receives a third request message used to request to perform quick inventory on a to-be-inventoried tag, where the to-be-inventoried tag includes a first tag. The core network device sends, to an access network device, a fourth request message used to request to perform quick inventory on the to-be-inventoried tag. The core network device receives an identifier of the first tag from the access network device. The core network device sends the identifier of the first tag to an application function network element.

According to a seventh aspect, a tag inventory method is provided. The method may be performed by an access network device, or may be performed by a module or a unit in the access network device. For ease of description, the module or the unit in the access network device is collectively referred to as the access network device in the following.

The method includes: The access network device receives a fourth request message used to request to perform quick inventory on a to-be-inventoried tag. The access network device sends, based on the fourth request message, a first message to the to-be-inventoried tag, where the first message is used to request to inventory the to-be-inventoried tag. After a first tag in the to-be-inventoried tag accesses the access network device, the access network device sends a quick inventory command to the first tag. The access network device receives an identifier of the first tag from the first tag. The access network device sends the identifier of the first tag to the core network device.

The method may alternatively be described as follows: The access network device receives a fourth request message used to request to perform quick inventory on a to-be-inventoried tag, where the to-be-inventoried tag includes a first tag. The access network device sends a first message to the first tag based on the fourth request message, where the first message is used to request to inventory the first tag. After the first tag accesses the access network device, the access network device sends a quick inventory command to the first tag. The access network device receives an identifier of the first tag from the first tag. The access network device sends the identifier of the first tag to the core network device.

With reference to the seventh aspect, in a possible implementation, the first message is further used to excite the to-be-inventoried tag.

According to an eighth aspect, a tag inventory method is provided. The method may be performed by an access network device and a core network device, or may be performed by modules or units in the access network device and the core network device. For ease of description, the modules or the units in the access network device and the core network device are collectively referred to as the access network device and the core network device in the following.

The method includes: The core network device receives a third request message used to request to perform quick inventory on a to-be-inventoried tag. The core network device sends, to the access network device, a fourth request message used to request to perform quick inventory on the to-be-inventoried tag. The access network device sends, based on the fourth request message, a first message to the to-be-inventoried tag, where the first message is used to request to inventory the to-be-inventoried tag. After a first tag in the to-be-inventoried tag accesses the access network device, the access network device sends a quick inventory command to the first tag. The access network device receives an identifier of the first tag from the first tag. The access network device sends the identifier of the first tag to the core network device. The core network device sends the identifier of the first tag to an application function network element.

The method may alternatively be described as follows: The core network device receives a third request message used to request to perform quick inventory on a to-be-inventoried tag, where the to-be-inventoried tag includes a first tag. The core network device sends, to the access network device, a fourth request message used to request to perform quick inventory on the to-be-inventoried tag. The access network device sends a first message to the first tag based on the fourth request message, where the first message is used to request to inventory the first tag. After the first tag accesses the access network device, the access network device sends a quick inventory command to the first tag. The access network device receives an identifier of the first tag from the first tag. The access network device sends the identifier of the first tag to the core network device. The core network device sends the identifier of the first tag to an application function network element.

With reference to the eighth aspect, in a possible implementation, the first message is further used to excite the to-be-inventoried tag.

For technical effects of the method in the sixth aspect to the eighth aspect and possible implementations thereof, refer to the fifth aspect and the possible implementations thereof. Details are not described again.

According to a ninth aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a communication unit.

In an implementation, the apparatus is a first tag, a core network device, or an access network device. When the apparatus is a first tag, a core network device, or an access network device, the communication unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used in the first tag, the core network device, or the access network device. When the apparatus is a chip, a chip system, or a circuit used in the first tag, the core network device, or the access network device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a tenth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a first tag, a core network device, or an access network device.

In another implementation, the apparatus is a chip, a chip system, or a circuit used in the first tag, the core network device, or the access network device.

According to an eleventh aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a twelfth aspect, a processor is provided, configured to perform the method provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as operations such as sending and receiving performed by a radio frequency circuit and an antenna. This is not limited in this application.

According to a thirteenth aspect, a computer-readable storage medium is provided. The computer-readable medium stores program code to be executed by a device, and the program code is used to perform the method provided in any one of the foregoing aspects or the implementations of the foregoing aspects.

According to a fourteenth aspect, a computer program product including instructions is provided. When the computer program product runs on a computer, the computer is enabled to perform the method provided in any one of the foregoing aspects or the implementations of the foregoing aspects.

According to a fifteenth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

According to a sixteenth aspect, a communication system is provided, including at least one of the first tag, the core network device, or the access network device.

### BRIEF DESCRIPTION OF DRAWINGS

FIG. 1 is a diagram of a type of a command of a reader/writer and a state of a tag;
FIG. 2 is a diagram of a state machine of a terminal;
FIG. 3 is a diagram of a network architecture to which an embodiment of this application is applicable;
FIG. 4 is a schematic flowchart of a tag state management method 400 according to this application;
FIG. 5 is an example of a lightweight common NAS message according to this application;
FIG. 6 is an example of a lightweight secure NAS message according to this application;
FIG. 7 is a schematic flowchart of a tag inventory method 700 according to this application;
FIG. 8 is a diagram of a tag state machine according to an embodiment of this application;
FIG. 9 is an example of a tag state change procedure according to an embodiment of this application;
FIG. 10A and FIG. 10B are another example of a tag state change procedure according to an embodiment of this application;
FIG. 11 is a diagram of a structure of an apparatus according to an embodiment of this application; and
FIG. 12 is another diagram of a structure of an apparatus according to an embodiment of this application.

### DESCRIPTION OF EMBODIMENTS

The following describes technical solutions in embodiments of this application with reference to accompanying drawings.

For ease of understanding embodiments of this application, before embodiments of this application are described, the following descriptions are first provided.

In this application, "indicating" or "indicate" may include a direct indication and an indirect indication, or "indicating" or "indicate" may be an explicit indication and/or an implicit indication. For example, when a piece of indication information is described as indicating information I, the information may directly indicate I or indirectly indicate I, but it does not necessarily indicate that the information carries I. For another example, the implicit indication may be based on a location and/or a resource used for transmission; and the explicit indication may be based on one or more parameters, and/or one or more indexes, and/or one or more bit patterns represented by the explicit indication.

Definitions listed for many features in this application are merely used to explain functions of the features by using examples. For detailed content of the definitions, refer to a conventional technology.

In the following embodiments, first, second, third, fourth, and various numbers are merely used for differentiation for ease of description, but are not used to limit the scope of embodiments of this application. For example, the numbers are used to distinguish between different fields and different information.

"Pre-definition" may be implemented by pre-storing, in a device, corresponding code or a table, or may be implemented in another manner that may be used for indicating related information. A specific implementation of "pre-definition" is not limited in this application. "Storage" may be storage in one or more memories. A type of the memory may be a storage medium in any form. This is not limited in this application.

A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, terms such as "example", "for example", and "in an (another) example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

The terms "include", "have", and their variants all mean "including but are not limited to", unless otherwise specified particularly.

"At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, and c may indicate a, b, c, a and b, a and c, b and c, or a, b, and c. Each of a, b, and c may be in a singular form or a plural form.

In embodiments of this application, related descriptions of sending a message, information, or data by a network element A to a network element B, and receiving, by the network element B, the message, information, or data from the network element A are intended to describe a network element to which the message, information, or data is to be sent. Whether the message, information, or data is directly sent or indirectly sent through another network element is not limited.

In embodiments of this application, descriptions such as "when...", "in a case of...", and "if" all mean that the device performs corresponding processing in an objective case, and are not limited to time, and the device is not required to perform a determining action during implementation. This does not mean that there is another limitation.

To facilitate understanding of embodiments of this application, terms used in this application are first briefly described.

### 1. Reader/writer and tag

A wireless radio frequency identification (radio frequency identification, RFID) technology is one of automatic identification technologies, and is used for non-contact bidirectional data communication through wireless radio frequency. The wireless radio frequency identification technology can be used to implement, through wireless radio frequency, read/write by a reader/writer on a tag, to identify a target and exchange data.

A wireless radio frequency identification system may include a reader/writer and a tag.

### (1) Reader/Writer

The reader/writer is also referred to as a read/write device, a read apparatus, a scanner, a read head, a communicator, a reader, an interpreter, a device having a read function and/or a write function, or the like. For ease of description, these devices are collectively referred to as the reader/writer in this application. The reader/writer is a device that reads information about the tag and/or writes information into the tag.

### (2) Tag

The tag is also referred to as an answer-back device, an electronic tag, an RFID tag, a radio frequency tag, a transponder, a data carrier, a record medium, a radio frequency card, an internet of things device, an internet of things device terminal, or the like. For ease of description, these devices are collectively referred to as the tag in this application. Each tag has a unique electronic code, for example, a tag identifier (tag identifier, TID). Each tag also has an electronic product code (electronic product code, EPC). The tag may be attached to an object or a device to identify a target object.

A storage area of the tag may be classified into a reserved (reserved) storage area, an EPC storage area, a TID storage area, and a user (user) storage area. The reserved storage area is mainly used to store a kill password (kill password), an access password (access password), and the like. The EPC storage area is mainly used to store the EPC and the like of the tag. The TID storage area is mainly used to store the TID of the tag. The user storage area is mainly used to store user-defined data.

The tag may include an active tag, a semi-passive tag, and a passive tag.

The active tag is also referred to as an active tag. A working power supply of the tag is supplied by a battery inside the tag, and energy of the battery may be converted into radio frequency energy needed for communication between the tag and the reader/writer.

The semi-passive tag is a tag that has a battery but does not actively transmit a radio frequency signal, and receives and responds to a radio frequency signal from the reader/writer.

The passive tag is also referred to as a passive tag. There is no battery inside the tag. When the tag is outside a read range of the reader/writer, the tag is in a passive state. When the tag is within the read range of the reader/writer, the tag extracts energy needed for working from radio frequency energy emitted by the reader/writer.

### 2. Command of a reader/writer and a state of a tag

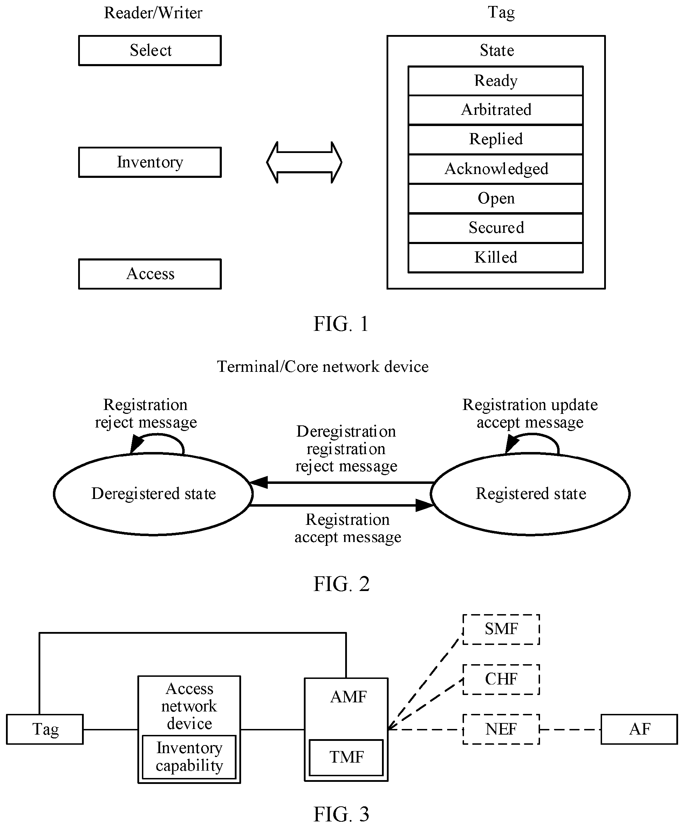

FIG. 1 is a diagram of a type of a command of a reader/writer and a state of a tag.

As shown in FIG. 1, from a perspective of functions, the command of the reader/writer may be of three types: select (select), inventory (inventory), and access (access). The select type command includes a select command. The inventory type command includes: a query (query) command, a query adjust (query adjust) command, a query repeat (query repeat) command, an acknowledgment (acknowledgment, ACK) command, a negative acknowledgment (NAK) command, and the like. The access type command includes: a request random number (request random number, Req_RN) command, a read (read) command, a write (write) command, a kill (kill) command, a lock (lock) command, an access (access) command, a blockwrite (blockwrite) command, a blockerase (blockerase) command, and the like. The access command, the blockwrite command, and the blockerase command are optional. **In** addition, codes of different lengths are reserved for future command extension.

For a command from the reader/writer, a state of the tag may be shown in FIG. 1. Specifically, the state of the tag includes: ready (ready), arbitrated (arbitrated), replied (replied), acknowledged (acknowledged), open (open), secured (secured), and killed (killed).

Specifically, the ready state is an initial state of a tag that is not killed is powered on. In this state, the tag is ready to respond to the command. In the arbitrated state, the tag mainly waits to respond to the query command, or the like. After responding to the query command, the tag enters the replied state. In this state, the tag may further respond to the acknowledgment command, to return an EPC of the tag to the reader/writer. After returning the EPC to the reader/writer, the tag enters the acknowledged state. In this state, the tag may further respond to the request random number command. When an access password is not 0, the tag may enter the open state. In this state, operations such as reading and writing may be performed on the tag. When an access password is known, the tag may enter the secured state. In this state, operations such as reading, writing, and locking may be performed on the tag. When the tag enters the killed state, the tag remains in the killed state and no longer generates a modulation signal to activate a radio frequency field, so that the tag is permanently invalid. To make the tag enter a state, a set of valid commands in an appropriate order is needed, and each command is valid only when the tag is in an appropriate state.

### 3. State machine of a terminal and a state machine of a core network device

FIG. 2 is a diagram of a state machine of a terminal.

In a wireless communication system, state change of the terminal on a terminal side and state change on a core network device (for example, an AMF) side are implemented based on a NAS message.

For the terminal side, for example, as shown in FIG. 2, when the terminal receives a registration accept (registration accept) message, the terminal changes from a deregistered (deregistered) state to a registered (registered) state. When the terminal receives a registration update accept (registration update accept) message, the terminal remains in the registered state. When the terminal receives a deregistration registration reject (deregistration registration reject) message, the terminal changes from the registered state to the deregistered state. When the terminal receives a registration reject (registration reject) message, the terminal remains in the deregistered state.

For the core network device (for example, the AMF) side, for example, as shown in FIG. 2, when the core network device sends the registration accept message to the terminal, the core network device switches a state of the terminal stored in the core network device from the deregistered state to the registered state. When the core network device sends the registration update accept message to the terminal, the core network device keeps a state of the terminal stored in the core network device as the registered state. When the core network device sends the deregistration registration reject message to the terminal, the core network device changes a state of the terminal stored in the core network device from the registered state to the deregistered state. When the core network device sends the registration reject message to the terminal, the core network device keeps a state of the terminal stored in the core network device as the deregistered state.

The deregistered state may also be referred to as a non-registered state or the like.

Currently, a terminal (for example, a passive tag or a semi-passive tag) in passive internet of things (passive internet of things, PIoT) has the following mainstream application scenarios:
(1) Logistics and warehousing: including goods inventory and tracking, and transportation process environment and goods state monitoring for high-value goods (such as vaccines).
(2) Industrial manufacturing: including environment and device state monitoring.

With development of technologies and environmental protection requirements, the passive internet of things has a prospect of larger-scale application and deployment, and it is predicted that hundreds of billions of devices will be covered in the future. However, a tag (the passive tag or the semi-passive tag) in the passive internet of things has a simple function, and usually needs to rely on external excitation to send information externally. The external excitation is usually from a reader/writer. Currently, deployment of the passive internet of things has features such as a short communication distance between a card reader and the tag, and a complex implementation of a state of the tag.

For the features, in a solution, an inventory capability (including operations such as reading, writing, killing, and locking on a tag) of the reader/writer is integrated into an access network device, so that the tag in the passive internet of things is excited and inventoried by using an air interface wireless technology, to increase the communication distance between the tag in the passive internet of things and the card reader, and perform unified management on tags in the passive internet of things through the access network device.

However, how to manage the state of the tag in a scenario in which the tag in the passive internet of things is inventoried by using the air interface wireless technology is not specified. In view of the foregoing problems, this application provides a tag state management method, to manage a state of a tag in this scenario.

For ease of understanding, a communication system to which an embodiment of this application may be applied is first described.

Embodiments of this application may be applied to various communication systems, for example, a long term evolution (long term evolution, LTE) system, an LTE frequency division duplex (frequency division duplex, FDD) system, an LTE time division duplex (time division duplex, TDD) system, a public land mobile network (public land mobile network, PLMN) system, a 5th generation (5th generation, 5G) system, a 6th generation (6th generation, 6G) system, or a future communication system. The 5G system in this application includes a non-standalone (non-standalone, NSA) 5G mobile communication system or a standalone (standalone, SA) 5G mobile communication system. Embodiments of this application may be further applied to a non-terrestrial network (non-terrestrial network, NTN) communication system like a satellite communication system. Embodiments of this application may be further applied to a device to device (device to device, D2D) communication system, a sidelink (sidelink, SL) communication system, a machine to machine (machine to machine, M2M) communication system, a machine type communication (machine type communication, MTC) system, an internet of things (Internet of things, IoT) communication system, a vehicle to everything (vehicle to everything, V2X) communication system, an uncrewed aerial vehicle (uncrewed aerial vehicle, UAV) communication system, or another communication system.

For example, FIG. 3 is a diagram of a network architecture.

As shown in FIG. 3, the network architecture may include: a tag, an access network device, a tag management function (tag management function, TMF), and an application function (application function, AF). The tag may interact with the TMF through the access network device. The access network device may communicate with the TMF through an interface (for example, an N2 interface). Optionally, the network architecture may further include: a session management function (session management function, SMF), a charging function (charging function, CHF), a network exposure function (network exposure function, NEF), or the like. In FIG. 3, dashed lines and dashed boxes represent optional connections and optional network elements.

The following briefly describes the network elements in FIG. 3.
1. For descriptions of the tag, refer to the foregoing descriptions. Details are not described herein again.
2. The access network device has an inventory capability of inventorying a tag, and may excite and inventory a tag in passive internet of things by using an air interface wireless technology. The access network device may be a device configured to communicate with a terminal (the tag shown in FIG. 3), or may be a device that connects a terminal to a wireless network. The access network device may be a node in a radio access network. The access network device may be a base station (base station), an evolved NodeB (evolved NodeB, eNodeB), a transmission reception point (transmission reception point, TRP), a home base station (for example, a home evolved NodeB, or a home NodeB, HNB), a Wi-Fi access point (access point, AP), a mobile switching center, a next generation NodeB (next generation NodeB, gNB) in a 5G mobile communication system, an access network device in an open radio access network (open radio access network, O-RAN or open RAN), a next generation base station in a 6th generation (6th generation, 6G) mobile communication system, a base station in a future mobile communication system, or the like. Alternatively, the access network device may be a module or a unit that implements some functions of a base station, for example, may be a central unit (central unit, CU), a distributed unit (distributed unit, DU), a remote radio unit (remote radio unit, RRU), or a baseband unit (baseband unit, BBU). Alternatively, the access network device may be a device that functions as a base station in a D2D communication system, a V2X communication system, an M2M communication system, an IoT communication system, and the like. Alternatively, the access network device may be a network device in an NTN. In other words, the access network device may be deployed on a high altitude platform or a satellite. The access network device may be a macro base station, may be a micro base station or an indoor base station, or may be a relay node, a donor node, or the like.
   A specific technology, a device form, and a name used by the access network device are not limited in embodiments of this application.
3. The TMF is responsible for managing a tag. The TMF may be an independent network element. The TMF may alternatively be integrated with another network element, for example, as shown in FIG. 3, the TMF is integrated with an access and mobility management function (access and mobility management function, AMF). The TMF may alternatively be a function of another network element, or may be understood as that another network element is improved, so that the network element has a function provided by the TMF. For example, an AMF is improved, so that the AMF has a function of the TMF. In other words, the AMF may have the function of the TMF in addition to functions such as user registration management, reachability detection, SMF node selection, and mobility state switching management.
4. The AF mainly supports interaction with a 3rd Generation Partnership Project (3rd generation partnership project, 3GPP) core network to provide a service, for example, affecting data routing decision and a policy control function, or providing a third-party service for a network. The AF may be an AF deployed on an operator network, or may be a third-party AF.
5. The SMF is mainly responsible for controlling session establishment, modification, and deletion, user plane node selection, and the like.
6. The CHF is mainly responsible for charging data record generation and service quota management.
7. The NEF is mainly configured to securely open a service and a capability provided by a 3GPP network function, and support secure interaction between the 3GPP network and a third-party application.

In the network architecture shown in FIG. 3, the network elements may communicate with each other through interfaces. The interfaces between the network elements may be point-to-point interfaces, or may be service-based interfaces. This is not limited in this application.

It should be understood that the network architecture shown above is merely an example for description, and a network architecture applicable to embodiments of this application is not limited thereto. Any network architecture that can implement functions of the network elements is applicable to embodiments of this application.

It should be further understood that the functions or the network elements, such as the AMF, the SMF, the TMF, the NEF, and the AF shown in FIG. 3 may be understood as network elements configured to implement different functions, and for example, may be combined into a network slice based on a requirement. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, some or all of the network elements may still use terms in 5G, or may use other names.

The following describes the tag state management method provided in this application.

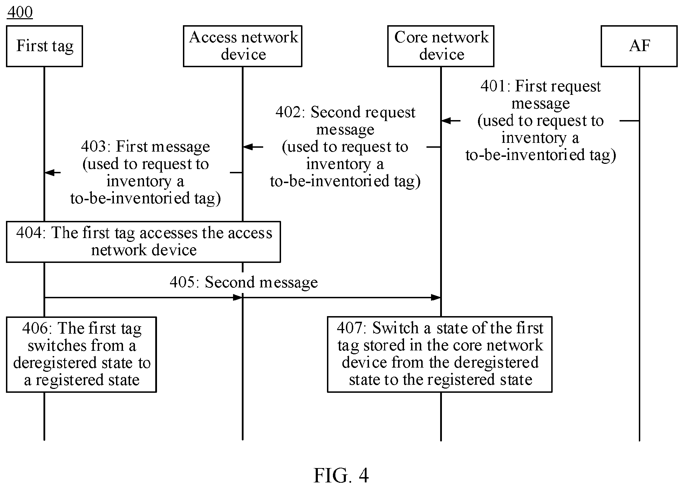

FIG. 4 is a schematic flowchart of a tag state management method 400 according to this application.

The method 400 may include at least a part of the following content.

It should be noted that an initial state of a to-be-inventoried tag may be a deregistered state.

Step 401: A core network device receives a first request message used to request to inventory the to-be-inventoried tag.

For example, as shown in FIG. 4, the core network device receives the first request message from an AF, in other words, the AF sends the first request message to the core network device.

The core network device may be a TMF, or may be another network element having a function of the TMF, for example, an AMF.

The first request message may carry information about the to-be-inventoried tag.

The information about the to-be-inventoried tag may include at least one of the following information: an identifier of each tag in to-be-inventoried tags, a value interval to which an identifier of the to-be-inventoried tag belongs, a group identifier of the to-be-inventoried tag, an identifier of a user to which the to-be-inventoried tag belongs, a type of the to-be-inventoried tag, an identifier of an application to which the to-be-inventoried tag belongs, or the like. The identifier of the tag may be a TID or an EPC of the tag.

For example, to-be-inventoried tags include three tags, and identifiers of the three tags are respectively: a TID #1, a TID #2, and a TID #3. The first request message may carry the identifiers of the tags in the to-be-inventoried tags, that is, the TID #1, the TID #2, and the TID #3.

For another example, to-be-inventoried tags include three tags, and values of TIDs of the three tags are 101, 101, and 102. The first request message may carry a value interval to which a TID of the to-be-inventoried tag belongs, that is, 100 to 102.

For another example, to-be-inventoried tags include three tags, the three tags belong to one tag group, and a group identifier of the tag group is a group #1. The first request message may carry a group identifier of the to-be-inventoried tag, that is, the group #1.

For another example, to-be-inventoried tags include three tags, the three tags belong to one user, and an identifier of the user is a user #1. The first request message may carry an identifier of the user to which the to-be-inventoried tag belongs, that is, the user #1.

For another example, to-be-inventoried terminals include three terminals, and the three terminals are all passive terminals or all semi-passive terminals. The first request message may carry a type of the to-be-inventoried tag, that is, the passive tag or the semi-passive tag.

For another example, to-be-inventoried tags include three tags, the three tags belong to one application, and an identifier of the application is an application #1. The first request message may carry an identifier of the application to which the to-be-inventoried tag belongs, that is, the application #1.

It should be noted that, the group identifier, the identifier of the user, the type of the tag, the identifier of the application, or the like has been written into a storage area (for example, a TID storage area, an EPC storage area, or another storage area) of the tag, in other words, the storage area of the tag stores the foregoing information.

Optionally, the first request message may further carry an inventory command and/or information about a geographical area in which the to-be-inventoried tag is located. The inventory command may be an operation requirement on a tag such as inventory, reading, or writing. The information about the geographical area in which the to-be-inventoried tag is located is used to determine an access network device to which the to-be-inventoried tag belongs.

Step 402: The access network device receives a second request message used to request to inventory the to-be-inventoried tag.

For example, as shown in FIG. 4, the access network device receives the second request message from the core network device, in other words, the core network device sends the second request message to the core network device.

Specifically, after receiving the first request message, the core network device sends the second request message to the access network device based on the first request message. For example, when the first request message includes the information about the geographical area in which the to-be-inventoried tag is located, the core network device determines, based on the information about the geographical area in which the to-be-inventoried tag is located, the access network device to which the to-be-inventoried tag belongs, and sends the second request message to the access network device.

The second request message may carry information about the to-be-inventoried tag. For descriptions of the information about the to-be-inventoried tag, refer to the foregoing descriptions. Details are not described again.

Optionally, the second request message may further carry an inventory command. The inventory command may be an operation requirement on a tag such as inventory, reading, or writing.

Step 403: The access network device sends a first message to the to-be-inventoried tag based on the second request message.

Correspondingly, the to-be-inventoried tag receives the first message from the access network device.

The first message is used to request to inventory the to-be-inventoried tag.

For example, the access network device learns, based on the second request message, of the to-be-inventoried tag, and sends the first message, where the first message includes a select command, the select command is used to select the to-be-inventoried tag, the select command may include a condition that needs to be met by a tag, and the to-be-inventoried tag may meet the condition in the select command. In this way, after receiving the first message, the to-be-inventoried tag may determine whether the to-be-inventoried tag meets the condition in the select command.

In a manner, a tag may be selected by matching a storage area flag of the tag. In this case, the select command may include a condition that needs to be met by a value of a corresponding storage area of the tag. The TID storage area is used as an example. The select command may include a value or a value range of the TID storage area. In this case, a tag whose TID value is a value in the select command or whose TID value is within a value range in the select command is the to-be-inventoried tag.

It should be noted that step 402 and step 403 may alternatively be described together as follows: The core network device sends, through the access network device, a first message to the to-be-inventoried tag.

Optionally, when the to-be-inventoried tag is a passive tag or a semi-passive tag, the first message is further used to power on the to-be-inventoried tag, in other words, the first message is further used to excite the to-be-inventoried tag.

The following describes the method 400 by using a first tag in the to-be-inventoried tag as an example.

Step 404: After receiving the first message, the first tag accesses the access network device.

"The first tag accesses the access network device" may alternatively be described as that the first tag successfully performs random access.

Specifically, after receiving the first message, the first tag may determine whether the first tag meets the condition in the select command. When the first tag meets the condition in the select command (that is, the first tag belongs to the to-be-inventoried tag), the first tag may start a procedure of accessing the access network device to access the access network device.

A specific implementation in which a tag accesses the access network device is not limited in this application. In a possible implementation, after sending the first message, the access network device sends a query message to a tag; and after receiving the query message, a tag that meets the condition in the select command returns a random number to the access network device. For example, the first tag sends a random number to the access network device. After receiving the random number from the first tag, the access network device returns an ACK message to the first tag, where the ACK message may carry the random number sent by the first tag. The first tag compares the sent random number with the received random number, and when the two random numbers are consistent, random access by the first tag succeeds.

Step 405: After accessing the access network device, the first tag sends a second message to the core network device.

The second message is used to request registration with the core network device. For example, the second message may be a registration request message. The second message may carry an identifier of the first tag. The identifier of the first tag may be a TID or an EPC of the first tag.

For example, as shown in FIG. 4, the first tag may send the second message to the core network device through the access network device.

Step 406: The first tag switches from a deregistered state to a registered state after sending the second message.

Manner A: After sending the second message, the first tag may switch from the deregistered state to the registered state. **In** other words, the second message triggers the first tag to switch from the deregistered state to the registered state.

Manner B: Another message after the second message triggers the first tag, so that the first tag can switch from the deregistered state to the registered state. Manner B may be implemented in a plurality of different manners. For example, implementations may be shown in Manner 1 to Manner 3 in the following.

Manner 1: After the first tag sends the second message, the method 400 further includes: After receiving the second message, the core network device sends a third message to the first tag, in other words, the first tag receives the third message from the core network device, where the third message indicates that the first tag is successfully registered with the core network device. Step 406 includes: The first tag switches from the deregistered state to the registered state after receiving the third message, in other words, the third message after the second message triggers the first tag to switch from the deregistered state to the registered state.

For example, the third message may be a registration accept message.

That is, when the first tag is successfully registered, the first tag switches from the deregistered state to the registered state.

Manner 2: After the first tag sends the second message, the method 400 further includes: The first tag sends a fourth message to the core network device, in other words, the core network device receives the fourth message from the first tag, where the fourth message is used to request to perform authentication on the first tag. When the authentication on the first tag succeeds, the core network device sends a fifth message to the first tag, in other words, the first tag receives the fifth message from the core network device, where the fifth message indicates that the authentication on the first tag succeeds. Step 406 includes: The first tag switches from the deregistered state to the registered state after receiving the fifth message, in other words, the fifth message after the second message triggers the first tag to switch from the deregistered state to the registered state.

For example, the fourth message may be an authentication request message, and the fifth message may be an authentication success message.

That is, when the authentication on the first tag succeeds, the first tag switches from the deregistered state to the registered state.

Manner 3: After the first tag sends the second message, the method 400 further includes: The first tag receives a sixth message from the core network device, in other words, the core network device sends the sixth message to the first tag, where the sixth message is used to request the first tag to perform authentication on an authentication server. When the authentication on the authentication server succeeds, the first tag sends a seventh message to the core network device, in other words, the core network device receives the seventh message from the first tag, where the seventh message indicates that the authentication on the authentication server succeeds. Step 406 includes: The first tag switches from the deregistered state to the registered state after sending the seventh message, in other words, the seventh message after the second message triggers the first tag to switch from the deregistered state to the registered state.

For example, the sixth message may be an authentication request message, and the seventh message may be an authentication success message.

That is, when the authentication on the authentication server corresponding to the first tag succeeds, the first tag switches from the deregistered state to the registered state.

Step 407: After receiving the second message, the core network device switches a state of the first tag stored in the core network device from the deregistered state to the registered state.

Manner C: After receiving the second message, the core network device may switch the state of the first tag stored in the core network device from the deregistered state to the registered state. In other words, the second message triggers the core network device to switch the state of the first tag stored in the core network device from the deregistered state to the registered state.

Manner D: Another message after the second message triggers the core network device to switch the state of the first tag stored in the core network device from the deregistered state to the registered state. Manner D may be implemented in a plurality of different manners. For example, implementations may be shown in Manner 1 to Manner 3 in the following.

Manner 1: For message exchange, refer to Manner 1 of Manner B. Step 407 includes: After sending the third message, the core network device switches the state of the first tag stored in the core network device from the deregistered state to the registered state. In other words, the third message after the second message triggers the core network device to switch the state of the first tag stored in the core network device from the deregistered state to the registered state.

That is, when the first tag is successfully registered, the core network device switches the state of the first tag stored in the core network device from the deregistered state to the registered state.

Manner 2: For message exchange, refer to Manner 2 of Manner B. Step 407 includes: After sending the fifth message, the core network device switches the state of the first tag stored in the core network device from the deregistered state to the registered state. In other words, the fifth message after the second message triggers the core network device to switch the state of the first tag stored in the core network device from the deregistered state to the registered state.

That is, when the authentication on the first tag succeeds, the core network device switches the state of the first tag stored in the core network device from the deregistered state to the registered state.

Manner 3: For message exchange, refer to Manner 3 of Manner B. Step 407 includes: After receiving the seventh message, the core network device switches the state of the first tag stored in the core network device from the deregistered state to the registered state. In other words, the seventh message after the second message triggers the core network device to switch the state of the first tag stored in the core network device from the deregistered state to the registered state.

That is, when the authentication on the authentication server corresponding to the first tag succeeds, the core network device switches the state of the first tag stored in the core network device from the deregistered state to the registered state.

Optionally, in another scenario of the foregoing embodiment, the method 400 further includes: The first tag starts a first timer when the state of the first tag is switched from the deregistered state to the registered state, where the first timer is configured to maintain the registered state of the first tag; and the first tag switches from the registered state to the deregistered state when the first timer expires; and/or the method 400 further includes: The core network device starts a second timer when the state of the first tag is switched from the deregistered state to the registered state, where the second timer is configured to maintain the registered state of the first tag; and when the second timer expires, the core network device switches the state of the first tag stored in the core network device from the registered state to the deregistered state.

In this scenario, the registered state of the first tag is maintained through a timer.

Optionally, when the registered state of the first tag is maintained through a timer, the method 400 may further include: The first tag resets or refreshes the first timer based on a message between the first tag and the core network device, and/or the core network device resets or refreshes the second timer based on a message between the first tag and the core network device. That is, when no message exchange is performed between the first tag and the core network device, the state of the first tag is switched from the deregistered state to the registered state.

Optionally, timing duration of the first timer and/or timing duration of the second timer may be set based on a capability of the first tag. In this case, the first tag may not reset or refresh the first timer based on the message between the first tag and the core network device, and/or the core network device may not reset or refresh the second timer based on the message between the first tag and the core network device.

The message between the first tag and the core network device may be any non-killed message, and the non-killed message herein may be understood as that the message is not used to kill the first tag. For example, the message may include an authentication-related message (for example, when Manner A and Manner C described above are used), and/or a message in a (user configuration update, UCU) process (for example, when any one of Manner A to Manner D described above is used).

Optionally, in another scenario of the foregoing embodiment, the method 400 further includes: When inventory on the first tag ends, the core network device switches the state of the first tag stored in the core network device from the registered state to the deregistered state. The core network device sends a ninth message to the access network device, in other words, the access network device receives the ninth message from the core network device, where the ninth message indicates that the inventory on the first tag ends. The access network device sends an eighth message to the first tag, in other words, the first tag in the registered state receives the eighth message from the access network device, where the eighth message indicates to inventory a next tag. The first tag switches from the registered state to the deregistered state based on the eighth message.

The eighth message may be a query message used to access the access network device. A tag that is not inventoried and that is in the to-be-inventoried tag is in the deregistered state. When receiving the query message, the tag that is not inventoried may respond to the query message from the access network device. The first tag is in the registered state. When receiving the query message, the first tag learns that inventory on the first tag has ended, and the first tag switches from the registered state to the deregistered state.

In this scenario, when inventory on the first tag ends, the state of the first tag is switched from the deregistered state to the registered state.

Optionally, in another scenario of the foregoing embodiment, the method 400 further includes: The core network device sends a message including a kill command to the first tag. After sending the message, the core network device switches the state of the first tag stored in the core network device from the registered state to the deregistered state. After receiving the message including the kill command, the first tag switches from the registered state to the deregistered state.

In this scenario, when killing is performed on the first tag, the state of the first tag is switched from the deregistered state to the registered state.

It should be noted that the first tag and the core network device may manage the state of the first tag in a same manner or different manners, and may manage based on any combination of the foregoing embodiments. This is not limited.

Optionally, in another scenario of the foregoing embodiment, the method 400 further includes: After receiving the second message from the first tag, the core network device allocates a first identifier to the first tag based on the second message. The core network device sends a correspondence between the first identifier and the first tag to the access network device, in other words, the access network device receives the correspondence between the first identifier from the core network device and the first tag, and stores the correspondence. In this way, both the access network device and the core network device store the correspondence between the first identifier and the first tag.

The first identifier is used for transmission of a message of the first tag between the access network device and the core network device, in other words, the first identifier is used to identify a transmission channel or resource used for transmission of the message of the first tag between the access network device and the core network device, in other words, the first identifier is used to identify that a message communicated between the access network device and the core network device is the message of the first tag. **In** an example, after receiving a message sent by the first tag to the core network device, the access network device sends the message to the core network device by using the first identifier corresponding to the first tag; and after receiving the message, the core network device determines, based on the first identifier carried in the message, that the message is from the first tag corresponding to the first identifier. **In** another example, when the core network device sends a message to the first tag, the core network device sends the message to the access network device by using the first identifier corresponding to the first tag; and after receiving the message, the access network device sends, based on the first identifier carried in the message, the message to the first tag corresponding to the first identifier.

**In** this scenario, the access network device and the core network device perform transmission on the message of the first tag based on the first identifier allocated by the core network device to the first tag.

Optionally, in another scenario of the foregoing embodiment, the method 400 further includes: After receiving the second message sent by the first tag to the core network device, the access network device allocates a second identifier to the first tag based on the second message. The access network device sends a correspondence between the second identifier and the first tag to the core network device, in other words, the core network device receives the correspondence between the second identifier from the access network device and the first tag, and stores the correspondence. **In** this way, both the access network device and the core network device store the correspondence between the second identifier and the first tag.

The second identifier is used for transmission of a message of the first tag between the access network device and the core network device, in other words, the second identifier is used to identify a transmission channel or resource used for transmission of the message of the first tag between the access network device and the core network device, in other words, the second identifier is used to identify that a message communicated between the access network device and the core network device is the message of the first tag. The correspondence between the second identifier and the first tag may be carried in the second message, or may be carried in another message. This is not limited.

A manner for using the second identifier is the same as a manner for using the first identifier. For details, refer to the foregoing descriptions. The details are not described again.

**In** this scenario, the access network device and the core network device perform transmission on the message of the first tag based on the second identifier allocated by the access network device to the first tag.

Optionally, in another scenario of the foregoing embodiment, the method 400 further includes: After receiving the second message sent by the first tag to the core network device, the access network device allocates a second identifier to the first tag based on the second message. The access network device sends a correspondence between the second identifier and the first tag to the core network device, in other words, the core network device receives the correspondence between the second identifier from the access network device and the first tag, and stores the correspondence. After receiving the second message from the first tag, the core network device allocates a first identifier to the first tag based on the second message. The core network device sends a correspondence between the first identifier and the first tag to the access network device, in other words, the access network device receives the correspondence between the first identifier from the core network device and the first tag, and stores the correspondence. **In** this way, both the access network device and the core network device store the correspondence between the first identifier and the first tag and the correspondence between the second identifier and the first tag.

The first identifier and the second identifier are used for transmission of a message of the first tag between the access network device and the core network device, in other words, the first identifier and the second identifier are used to identify a transmission channel or resource used for transmission of the message of the first tag between the access network device and the core network device, in other words, the first identifier and the second identifier are used to identify that a message communicated between the access network device and the core network device is the message of the first tag. In an example, after receiving a message sent by the first tag to the core network device, the access network device sends the message to the core network device by using the first identifier and the second identifier that correspond to the first tag; and after receiving the message, the core network device determines, based on the first identifier carried in the message, that the message is from the first tag corresponding to the first identifier. In another example, when the core network device sends a message to the first tag, the core network device sends the message to the access network device by using the first identifier and the second identifier that correspond to the first tag; and after receiving the message, the access network device sends, based on the second identifier carried in the message, the message to the first tag corresponding to the second identifier.

In this scenario, the access network device and the core network device perform transmission on the message of the first tag based on the first identifier and the second identifier.

The first identifier and/or the second identifier may be next generation application protocol (next generation application protocol, NGAP) IDs or a next generation application protocol ID.

Optionally, in another scenario of the foregoing embodiment, the method 400 further includes: The core network device releases a correspondence between an identifier and the first tag when the state of the first tag is switched from the registered state to the deregistered state, where the identifier is used for transmission of a message of the first tag between the core network device and the access network device; and/or the method 400 further includes: When the state of the first tag is switched from the registered state to the deregistered state, the core network device sends a ninth message to the access network device, in other words, the access network device receives the ninth message from the core network device, where the ninth message indicates that the inventory on the first tag ends. The access network device releases the correspondence between the identifier and the first tag based on the ninth message. The identifier includes a first identifier allocated by the core network device to the first tag and/or a second identifier allocated by the access network device to the first tag.

For example, in a scenario in which the access network device and the core network device perform transmission on the message of the first tag based on the first identifier allocated by the core network device to the first tag, the access network device and the core network device release a correspondence between the first identifier and the first tag.

For another example, in a scenario in which the access network device and the core network device perform transmission on the message of the first tag based on the second identifier allocated by the access network device to the first tag, the access network device and the core network device release a correspondence between the second identifier and the first tag.

For another example, in a scenario in which the access network device and the core network device perform transmission on the message of the first tag based on the first identifier and the second identifier, the access network device and the core network device release a correspondence between the first identifier and the first tag and a correspondence between the second identifier and the first tag.

Optionally, in another scenario of the foregoing embodiment, the method 400 further includes: The core network device releases a correspondence between an identifier and the first tag when the state of the first tag is switched from the registered state to the deregistered state, where the identifier is used for transmission of a message of the first tag between the core network device and the access network device; and/or the method 400 further includes: The access network device starts a third timer when the state of the first tag is switched from the deregistered state to the registered state, where the third timer is configured to maintain the correspondence between the identifier and the first tag. The access network device releases the correspondence between the identifier and the first tag when the third timer expires. The identifier includes a first identifier allocated by the core network device to the first tag and/or a second identifier allocated by the access network device to the first tag.

For example, in a scenario in which the access network device and the core network device perform transmission on the message of the first tag based on the first identifier allocated by the core network device to the first tag, the access network device and the core network device release a correspondence between the first identifier and the first tag.

For another example, in a scenario in which the access network device and the core network device perform transmission on the message of the first tag based on the second identifier allocated by the access network device to the first tag, the access network device and the core network device release a correspondence between the second identifier and the first tag.

For another example, in a scenario in which the access network device and the core network device perform transmission on the message of the first tag based on the first identifier and the second identifier, the access network device and the core network device release a correspondence between the first identifier and the first tag and a correspondence between the second identifier and the first tag.

Optionally, when the access network device maintains the correspondence between the identifier and the first tag based on the third timer, the method 400 further includes: The access network device resets or refreshes the third timer based on a message between the first tag and the core network device. That is, when no message exchange is performed between the first tag and the core network device, the access network device may release the correspondence between the identifier and the first tag. For descriptions of the message between the first tag and the core network device, refer to the foregoing descriptions. Details are not described again.

Optionally, timing duration of the third timer may be set based on a capability of the first tag. In this case, the access network device may not reset or refresh the third timer based on the message between the first tag and the core network device.

In this way, based on the method 400, a state of a tag can be managed in a scenario in which inventory is performed on the tag by using an air interface wireless technology. In addition, in comparison with complex state change in a conventional technology, simplification of the state of the tag to the registered state and the deregistered state helps simplify management of the state of the tag.

Optionally, in another scenario of the foregoing embodiment, because a capability of a tag (for example, a passive tag or a semi-passive tag) is weak, a message received or sent by the tag is as short as possible. Therefore, based on an existing NAS message, this application provides a lightweight NAS message by compressing a packet header of the NAS message. All the messages (for example, the second message to the seventh message) between the first tag and the core network device may use packet headers in the following. In other words, all the messages (for example, the second message to the seventh message) between the first tag and the core network device may be lightweight NAS messages provided in this application.

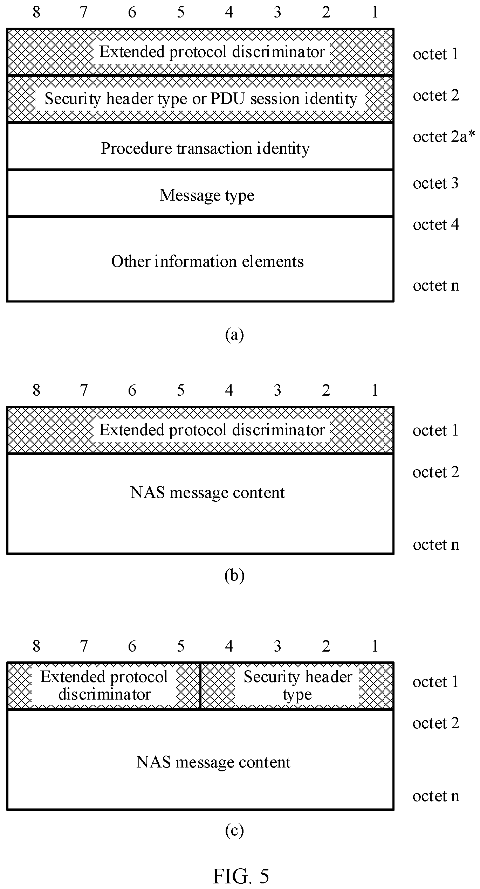

FIG. 5 is an example of a lightweight common NAS message according to this application.

(a) in FIG. 5 shows a format of an existing common NAS message. A packet header includes an extended protocol discriminator (extended protocol discriminator), and a security header type (security header type) or a PDU session identity (PDU session identity). The extended protocol discriminator occupies one byte, the security header type or the PDU session identity occupies one byte, and in this case, the packet header occupies two bytes in total.

(b) in FIG. 5 shows a format 1 of a lightweight common NAS message according to this application. When security protection does not need to be performed on the message, a packet header of the lightweight common NAS message needs to include only a protocol discriminator (protocol discriminator), and the protocol discriminator may reuse an existing extended protocol discriminator. In this way, the packet header of the lightweight common NAS message in the format 1 occupies one byte, and one byte is reduced in comparison with an existing common NAS message. However, the format 1 does not have scalability, and the NAS message that supports security protection cannot be extended.

(c) in FIG. 5 shows a format 2 of a lightweight common NAS message according to this application. In the format 2, a 4-bit (bit) short protocol discriminator is used, and a size of the protocol discriminator and a security header type is compressed to one byte. In this way, a packet header of the lightweight common NAS message in the format 2 still occupies one byte, and one byte is reduced in comparison with an existing common NAS message.

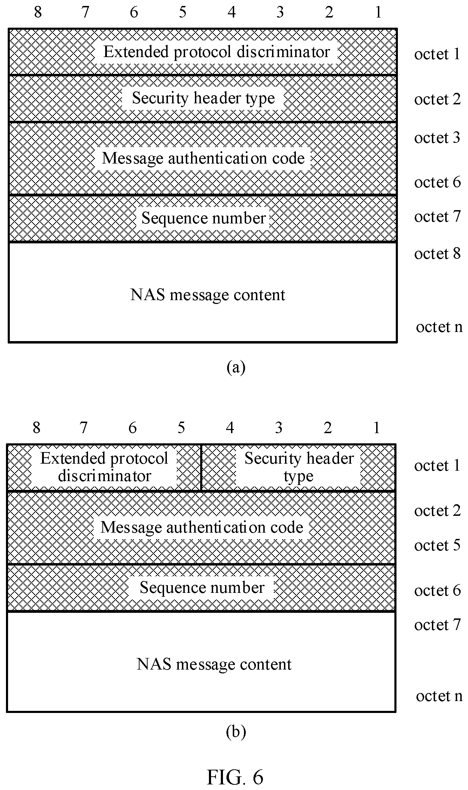

In addition, the format 2 is compatible, and may be compatible with a non-security protected message and a security protected message. When security protection does not need to be performed on a message, the security header type may be set to "non-security protected", and the packet header may not include a message authentication code (message authentication code) and a sequence number (sequence number), as shown in (c) in FIG. 5. When security protection needs to be performed on a message, the security header type may be set to "security protected". A format of the lightweight secure NAS message is shown in FIG. 6.

FIG. 6 is an example of a lightweight secure NAS message according to this application.

(a) in FIG. 6 shows a format of an existing secure NAS message. A packet header includes an extended protocol discriminator, a security header type, a message authentication code, and a sequence number. The extended protocol discriminator and the security header type each occupy one byte, the message authentication code occupies four bytes, the sequence number occupies one byte, and in this case, the packet header occupies seven bytes in total.

(b) in FIG. 6 shows a format of a lightweight secure NAS message according to this application. Specifically, a 4-bit short protocol discriminator is used, and a size of the protocol discriminator and a security header type is compressed to one byte. A message authentication code and a sequence number may reuse an existing message authentication code and sequence number. In this way, a packet header of the lightweight secure NAS message occupies six bytes in total, and one byte is reduced in comparison with an existing secure NAS message.

Optionally, in another scenario of the foregoing embodiment, after the core network device delivers an inventory command (for example, a read command and a write command) to a tag, in some cases, the tag needs to report, to the core network device, data or a parameter corresponding to the inventory command, for example, data read by the core network device or alarm data of the tag.

Table 1 shows content of a UE configuration update complete message (configuration update complete message) of the existing 3GPP. As shown in Table 1, the content of the configuration update complete message includes: an extended protocol discriminator, a security header type, a spare half octet (spare half octet), and a configuration update complete message identity (configuration update complete message identity). The existing configuration update complete message cannot carry data returned by the tag.

**Table 1**

| IEI | Information element (information element) | Type/Reference (type/reference) | Presence (presence) | Format (format) | Length (length) |
|---|---|---|---|---|---|
| | Extended protocol discriminator | Extended protocol discriminator 9.2 | M | V | 1 |
| | Security header type | Security header type 9.3 | M | V | 1/2 |
| | Spare half octet | Spare half octet 9.5 | M | V | 1/2 |
| | Configuration update complete message identity | Configuration update complete message identity 9.7 | M | V | 1 |

In a possible implementation, the configuration update complete message may be extended, so that the tag may report, to the core network device by using the configuration update complete message, the data or parameter that corresponds to the inventory command.

In an example, an information element identifier (information element identifier, IEI) type may be added to the existing configuration update complete message, to carry the data or parameter that corresponds to the inventory command and that is reported by the tag to the core network device. For example, tag configuration response data **IEI** may be added to the configuration update complete message to carry the data or parameter that corresponds to the inventory command and that is reported by the tag to a TMF or an AMF.

Table 2 is an example of the content of the configuration update complete message provided in this application. As shown in Table 2, content of a configuration update response message includes: an extended protocol discriminator, a security header type, a spare half octet, a configuration update complete message identity, and tag configuration response data (tag configuration response data). 9.11.3.xx indicates a type or reference that can be distinguished from an existing type or reference.

**Table 2**

| IEI | Information element | Type/Reference | Presence | Format | Length |
|---|---|---|---|---|---|
| | Extended protocol discriminator | Extended protocol discriminator 9.2 | M | V | 1 |
| | Security header type | Security header type 9.3 | M | V | 1/2 |
| | Spare half octet | Spare half octet 9.5 | M | V | 1/2 |
| | Configuration update complete message identity | Configuration update complete message identity 9.7 | M | V | 1 |
| | Tag configuration response data | Tag configuration response data 9.11.3.xx | O | V | TBD (To Be Determined) |

In another possible implementation, a new message may be added, and the tag may report, to the core network device by using the new message, the data or parameter that corresponds to the inventory command.

In an example, a tag configuration update response message (configuration update response message) may be added, where the message carries a tag configuration response data (tag configuration response data) information element, to carry the data or parameter that corresponds to the inventory command and that is reported by the tag to the core network device.

Table 3 is an example of content of the configuration update response message. As shown in Table 3, the content of the configuration update response message includes: an extended protocol discriminator, a security header type, a spare half octet, a configuration update response message identity (configuration update response message identity), and tag configuration response data. 9.x and 9.11.3.xx indicate types or references that can be distinguished from existing types or references.

**Table 3**

| IEI | Information element | Type/Reference | Presence | Format | Length |
|---|---|---|---|---|---|
| | Extended protocol discriminator | Extended protocol discriminator9.2 | M | V | 1 |
| | Security header type | Security header type 9.3 | M | V | 1/2 |
| | Spare half octet | Spare half octet 9.5 | M | V | 1/2 |
| | Configuration update response message identity | Configuration update response message identity 9.x | M | V | 1 |
| | Tag configuration response data | Tag configuration response data 9.11.3.xx | O | V | TBD |

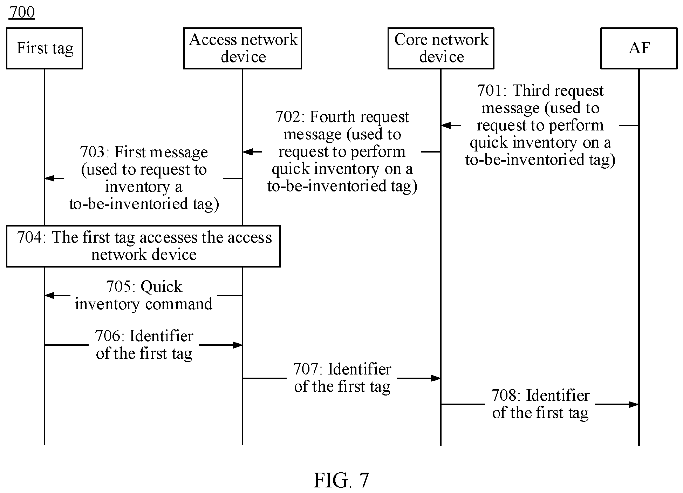

FIG. 7 is a schematic flowchart of a tag inventory method 700 according to this application.

The method 700 may include at least a part of the following content.

It should be noted that an initial state of a to-be-inventoried tag may be a deregistered state.

Step 701: A core network device receives a third request message used to request to inventory the to-be-inventoried tag.

For example, as shown in FIG. 7, the core network device receives the third request message from an AF, in other words, the AF sends the third request message to the core network device.

The core network device may be a TMF, or may be another network element having a function of the TMF, for example, an AMF.

The third request message may carry information about the to-be-inventoried tag and/or information about a geographical area in which the to-be-inventoried tag is located. For detailed descriptions of the information about the to-be-inventoried tag, refer to step 401.

Optionally, the third request message carries a quick inventory command.

It is assumed that the to-be-inventoried tag includes a first tag. In the method 700, the first tag is used as an example to describe the tag inventory method provided in this application.

Step 702: An access network device receives a fourth request message used to request to inventory the to-be-inventoried tag.

For example, as shown in FIG. 7, the access network device receives the fourth request message from the core network device, in other words, the core network device sends the fourth request message to the core network device.

Specifically, after receiving the third request message, the core network device sends the fourth request message to the access network device based on the third request message. For example, when the third request message includes the information about the geographical area in which the to-be-inventoried tag is located, the core network device determines, based on the information about the geographical area in which the to-be-inventoried tag is located, the access network device to which the to-be-inventoried tag belongs, and sends the fourth request message to the access network device.

The fourth request message may carry information about the to-be-inventoried tag. For detailed descriptions of the information about the to-be-inventoried tag, refer to step 401.

Optionally, the third request message carries a quick inventory command.

Step 703: The access network device sends, based on the fourth request message, a first message to the to-be-inventoried tag.

The first message is used to request to inventory the to-be-inventoried tag.

Step 704: After receiving the first message, the first tag accesses the access network device.

For implementations of steps 703 and 704, refer to steps 403 and 404. Details are not described herein again.

Step 705: The access network device sends a quick inventory command to the first tag, in other words, the first tag receives the quick inventory command from the access network device.

Step 706: The first tag sends an identifier of the first tag to the access network device based on the quick inventory command, in other words, the access network device receives the identifier of the first tag.

Step 707: The access network device sends the identifier of the first tag to the core network device, in other words, the core network device receives the identifier of the first tag sent by the access network device.

Step 708: The core network device sends the identifier of the first tag to the AF, or the AF receives the identifier of the first tag sent by the core network device.

In this way, according to the method 700, quick inventory on a tag can be implemented. During quick inventory on the tag, the access network device performs inventory on the tag and feeds back the tag to the core network device or the AF in a unified manner. The first tag and the core network device may not need to switch a state of the first tag between a registered state and a deregistered state as described in the method 400.

The method provided in this application is described in detail below with reference to specific examples.

In the following examples, an example in which the access network device is a base station and the core network device is a TMF or an AMF is used for description. The tag does not have a capability of actively sending a message or information, for example, a passive tag or a semi-passive tag. The access network device has a capability of inventorying a tag.

### Example 1

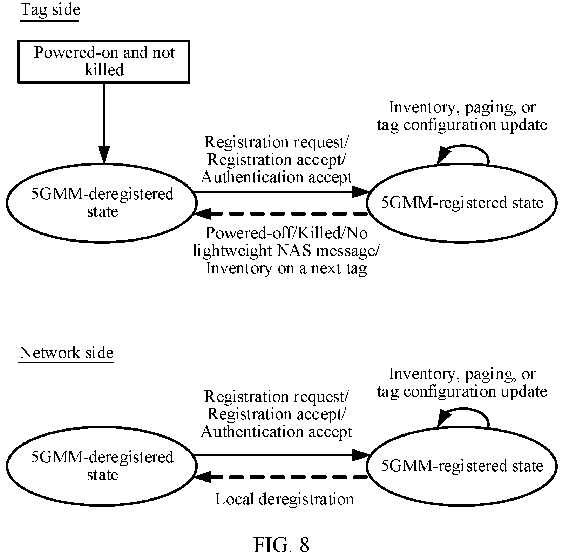

FIG. 8 is a diagram of a tag state machine according to an embodiment of this application.

A solid line arrow in FIG. 8 indicates sending or receiving of a message. **In** FIG. 8, based on the network architecture shown in FIG. 3, a tag state machine on a tag side and a tag state machine on a network side (for example, an AMF side or a TMF side) are described.

### (1) 5GMM-deregistered (5GMM-deregistered) state

After receiving excitation provided by a base station (that is, a tag is powered on), the tag performs simplified initial automatic network selection and enters the 5GMM-deregistered state. 5GMM is short for 5GS mobility management (5GS mobility management), and 5GS is short for 5G system (5th generation system).

### (2) Change from the 5GMM-deregistered state to a 5GMM-registered (5GMM-registered) state

During inventory, the tag sends a registration request (registration request) to a network by using a lightweight NAS message. After receiving the registration request from the tag, the network sends a registration accept (registration accept) to the tag by using the lightweight NAS message. Optionally, the network further performs authentication on the tag. When the authentication on the tag succeeds (that is, the tag is valid), the network sends an authentication accept (authentication accept) to the tag by using the lightweight NAS message. For detailed descriptions of the lightweight NAS message, refer to the descriptions in FIG. 5.

**In** a possible implementation, when sending the registration request, after receiving the registration accept, or after receiving the authentication accept, the tag sets a state of the tag to the 5GMM-registered state. Only the tag in the registered state can receive a lightweight NAS message subsequently sent by the network.

In a possible implementation, after receiving the registration request from the tag, after returning the registration accept to the tag, or after returning the authentication accept to the tag, the network sets the state of the tag on the network side to the 5GMM-registered state.

Then, the network may perform a next operation on the tag in the 5GMM-registered state, for example, an inventory operation, a paging operation, or a tag configuration update operation, where the tag configuration update operation may be reading or writing data and the like. In addition, in a process of performing the inventory operation, paging operation, and tag configuration update operation, the tag state machine does not change any more, that is, the tag remains in the 5GMM-registered state on both the tag side and the network side. For the tag, after the tag enters the registered state, the tag remains in the 5GMM-registered state as long as a lightweight NAS message is sent or received.

### (3) Change from the 5GMM-registered state to the 5GMM-deregistered state

For the tag side, the tag enters the 5GMM-deregistered state from the 5GMM-registered state when the tag is powered off, the tag is killed, the tag has not received a lightweight NAS message for a period of time, or the tag receives an indication for inventorying a next tag.

For the network side, after performing local deregistration on the tag (for example, when a timer expires or no operation is performed on the tag for a period of time), the network sets the state of the tag maintained on the network to the 5GMM-deregistered state.

### Example 2

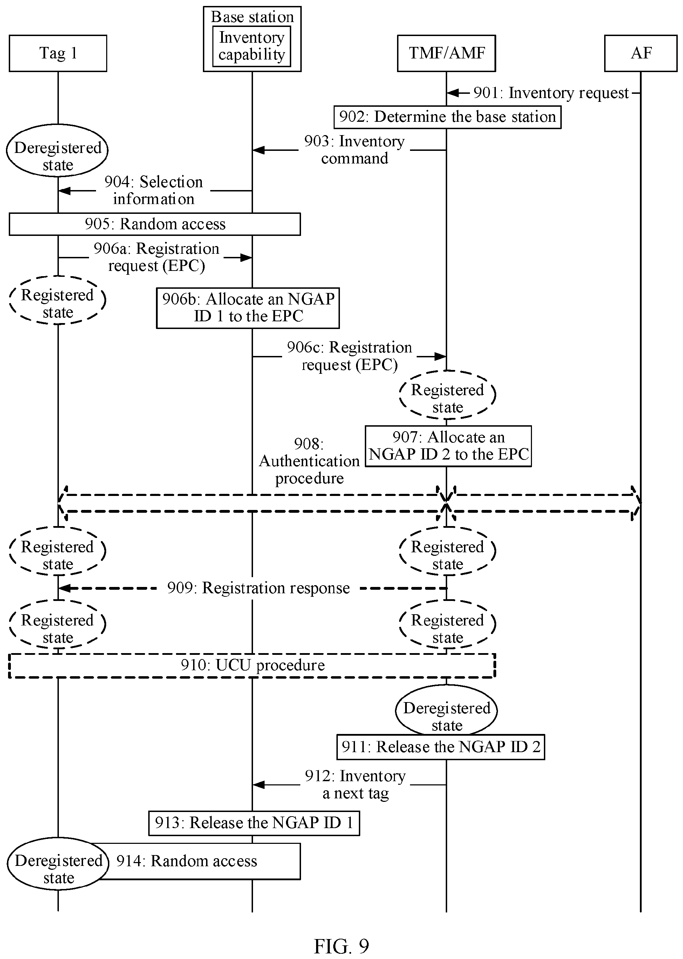

FIG. 9 is an example of a tag state change procedure according to an embodiment of this application.

Dashed lines in FIG. 9 represent optional steps. A tag is initially in a deregistered state.

Step 901: An AF sends an inventory request to a TMF or an AMF.

Correspondingly, the TMF or the AMF receives the inventory request from the AF.

The inventory request may be an operation requirement on a tag such as quick inventory, inventory, reading, or writing. The inventory request may include tag identification information and information about a geographical area in which the tag is located. The tag identification information indicates a to-be-inventoried tag, and may be a TID, an EPC, or the like of the tag.

It should be noted that there may be one or more tags. For example, when inventory is performed on a tag, the tag identification information may be a TID or an EPC of the tag. For another example, when inventory is performed on a plurality of tags, the tag identification information may be a group of TIDs, a TID range, a group of EPCs, or an EPC range.

Step 902: The TMF or the AMF determines, based on the information about a geographical area in which a tag is located, a base station to which the tag belongs.

Step 903: The TMF or the AMF parses the inventory request, and delivers a corresponding inventory command to the base station based on a parsing result.

The inventory command may include the tag identification information. The tag identification information indicates a to-be-inventoried tag, and may be a TID, an EPC, or the like of the tag.

For example, when the inventory request is used to request to perform quick inventory, inventory, reading, or writing on the tag, the inventory command may be a quick inventory command, an inventory command, a read command, or a write command.

Step 904: The base station sends selection information (or a select command) to the tag based on the received inventory command.

Correspondingly, the tag receives the selection information from the base station.

The selection information is used to select a to-be-inventoried tag.

In a possible implementation, a tag is selected by matching a storage area flag of the tag (for example, mask matching or determined value matching). In this case, the selection information may include a condition that needs to be met by a value of a corresponding storage area of the tag. A TID storage area is used as an example. The selection information may include a value or a value range of the TID storage area. In this case, a tag whose TID value is a value in the selection information or whose TID value is within a value range in the selection information is the to-be-inventoried tag.

Step 905: The tag determines, based on the received selection information, that a requirement in the selection information is met, and starts a random access procedure.

For example, the selection information is used to select a tag whose TID values are 1 to 5. The tag whose TID values are 1 to 5 meets the requirement, and the random access procedure is started.

A specific implementation of the random access procedure is not limited in this application. In a possible implementation, the base station sends a query message to the tag; after receiving the query message, the tag returns a random number to the base station; and after receiving the random number from the tag, the base station returns an ACK message to the tag, where the ACK message may carry the random number sent by the tag. Random access by the tag may be implemented by using the message exchange process.

Descriptions are provided below by using an example in which a tag 1 successfully performs random access.

Step 906: The tag 1 that successfully performs random access sends a registration request to the TMF or the AMF based on a lightweight NAS message.

Correspondingly, the TMF or the AMF receives the registration request from the tag 1.

The lightweight NAS message includes the registration request and an identifier of the tag 1. The identifier of the tag 1 may be a TID or an EPC of the tag 1, and the EPC is used as an example in FIG. 9. For detailed descriptions of the lightweight NAS message, refer to the descriptions in FIG. 5.

Specifically, as shown in steps 906a to 906c in FIG. 9, the tag 1 sends, to the TMF or the AMF through the base station, the lightweight NAS message that carries the registration request.

Step 906a: The tag 1 sends the lightweight NAS message to the base station, and correspondingly, the base station receives the lightweight NAS message from the tag 1. Step 906b: When the lightweight NAS message is transparently transmitted, the base station allocates an NGAP ID 1 to the EPC of the tag 1, and all messages subsequently transmitted by using the NGAP ID 1 are from the tag 1. Step 906c: The base station sends, to the TMF or the AMF, the lightweight NAS message from the tag 1 by using the NGAP ID 1, and correspondingly, the TMF or the AMF receives the lightweight NAS message.

Optionally, the tag 1 sets a state of the tag 1 to a registered state based on the sent lightweight NAS message including the registration request.

Optionally, after receiving the registration request from the tag 1, the TMF or the AMF determines, based on the inventory request, that subsequently there is a command to be sent to the tag 1. In this case, the TMF or the AMF sets the state of the tag 1 maintained in the TMF or the AMF to the registered state.

It should be noted that, that the base station allocates the NGAP ID 1 to the EPC of the tag 1 may alternatively be described as follows: The base station generates or starts an association between the EPC of the tag 1 and the NGAP ID 1, or the base station generates an association relationship or a correspondence between the EPC of the tag and the NGAP ID 1 and stores the association relationship or the correspondence.

Step 907: The TMF or the AMF allocates an NGAP ID 2 to the ECP of the tag 1.

Subsequently, the TMF or the AMF sends and receives a message of the tag 1 based on the NGAP ID 2. In other words, all messages transmitted by using the NGAP ID 2 are from the tag 1.

Similarly, that the TMF or the AMF allocates the NGAP ID 2 to the EPC of the tag 1 may alternatively be described as follows: The TMF or the AMF generates or starts an association between the EPC of the tag 1 and the NGAP ID 2, or the TMF or the AMF generates an association relationship or a correspondence between the EPC of the tag and the NGAP ID 2 and stores the association relationship or the correspondence.

Step 908: If authentication needs to be performed on a tag type of the tag 1, an authentication procedure for the tag 1 may be performed after the registration request is sent to the TMF or the AMF.

Whether the tag 1 is valid may be determined by using the authentication procedure. In the authentication procedure for the tag 1, an authentication-related lightweight NAS message is exchanged between the tag 1 and the TMF or the AMF, and between the TMF or the AMF and the AF.

Optionally, the tag 1 may alternatively set the state of the tag 1 to the registered state based on the authentication-related lightweight NAS message. For example, when the tag 1 receives an authentication accept sent by the TMF or the AMF by using the lightweight NAS message, the tag 1 changes the state of the tag 1 from the deregistered state to the registered state.

Optionally, after sending the authentication-related lightweight NAS message to the tag 1, the TMF or the AMF may set the state of the tag 1 maintained in the TMF or the AMF to the registered state. For example, after sending the authentication accept to the tag 1 by using the lightweight NAS message, the TMF or the AMF sets the state of the tag 1 maintained in the TMF or the AMF to the registered state.

Step 908 is an optional step.

Step 909: After receiving the registration request from the tag 1, the TMF or the AMF may send a registration response (for example, a registration accept) to the tag 1 by using the lightweight NAS message.

Correspondingly, the tag 1 receives the registration response from the TMF or the AMF.

Optionally, the tag 1 may alternatively set the state of the tag 1 to the registered state based on the lightweight NAS message that carries the registration response. For example, when the tag 1 receives the registration accept sent by the TMF or the AMF by using the lightweight NAS message, the tag 1 changes the state of the tag 1 from the deregistered state to the registered state.

Optionally, after sending the registration response to the tag 1 by using the lightweight NAS message, the TMF or the AMF may set the state of the tag 1 maintained in the TMF or the AMF to the registered state. For example, after sending the registration accept to the tag 1 by using the lightweight NAS message, the TMF or the AMF sets the state of the tag 1 maintained in the TMF or the AMF to the registered state.

Step 909 is an optional step.

Step 910: The tag 1 and the TMF or the AMF perform a user configuration update (user configuration update, UCU) procedure.

Specifically, after both the state of the tag 1 on a tag 1 side and the state of the tag 1 on an AMF side or an AMF side are the registered state, the TMF or the AMF sends a UCU command to the tag 1 by using the lightweight NAS message; and after receiving the UCU command from the TMF or the AMF, the tag 1 sends a reply to the UCU command to the TMF or the AMF by using the lightweight NAS message. The UCU command may be an inventory command, a read command, a write command, a kill command, or the like.

Optionally, the tag 1 may alternatively set the state of the tag 1 to the deregistered state based on the lightweight NAS message that carries the kill command.

Optionally, after sending the kill command to the tag 1 by using the lightweight NAS message, the TMF or the AMF may set the state of the tag 1 maintained in the TMF or the AMF to the deregistered state.

Step 910 is an optional step.

Step 911: When the TMF or the AMF finds that an inventory operation performed on the tag 1 ends (that is, there is no next lightweight NAS message that needs to be sent), the TMF or the AMF releases the NGAP ID 2 between the TMF or the AMF and the base station, and sets the state of the tag 1 maintained in the TMF or the AMF to the deregistered state.

It should be noted that, that the TMF or the AMF releases the NGAP ID 2 may alternatively be described as follows: The TMF or the AMF releases the association between the EPC of the tag 1 and the NGAP ID 2, or the TMF or the AMF deletes the association relationship or the correspondence between the EPC of the tag 1 and the NGAP ID 2, or the TMF or the AMF performs local deregistration on the tag 1.

It should be further noted that, if step 910 is performed, and in step 910, the TMF or the AMF has set the state of the tag 1 maintained in the TMF or the AMF to the deregistered state based on the kill command sent to the tag 1, the TMF or the AMF may not change the state of the tag 1 maintained in the TMF or the AMF in step 911.

Step 912: The TMF or the AMF sends, to the base station, a command for inventorying a next tag.

Correspondingly, the base station receives, from the TMF or the AMF, the command for inventorying a next tag.

The command for inventorying a next tag is not carried in a NAS message or a lightweight NAS message, that is, the message is a message sent to the base station, and the base station may identify or parse the message.

Step 913: The base station releases the NGAP ID 1 between the base station and the TMF or the AMF based on the command for inventorying a next tag.

It should be noted that, that the base station releases the NGAP ID 1 may alternatively be described as follows: The base station releases the association between the EPC of the tag 1 and the NGAP ID 1, or the base station deletes the association relationship between the EPC of the tag 1 and the NGAP ID 1, or the base station performs local deregistration on the tag 1.

Step 914: The base station performs a next round of inventory procedure.

Specifically, the base station starts a new round of random access procedure based on the command for inventorying a next tag.

For example, the base station sends a query message to the tag, and the query message is refreshed. When receiving a query message from the base station again, the tag 1 sets the state of the tag 1 to the deregistered state based on the query message.

In addition, it should be noted that, when the inventory command delivered by the TMF or the AMF to the base station is a quick inventory command, message exchange does not need to be performed between the tag and the TMF or the AMF, and the base station collects and feeds back the EPC of the tag in a unified manner. In this case, the state of the tag does not need to be changed on the tag and the TMF or the AMF.

### Example 3

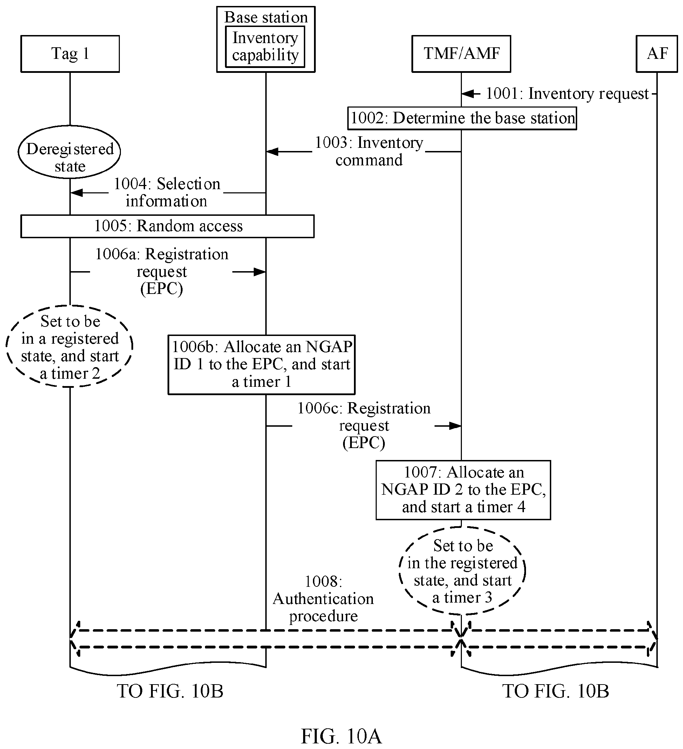

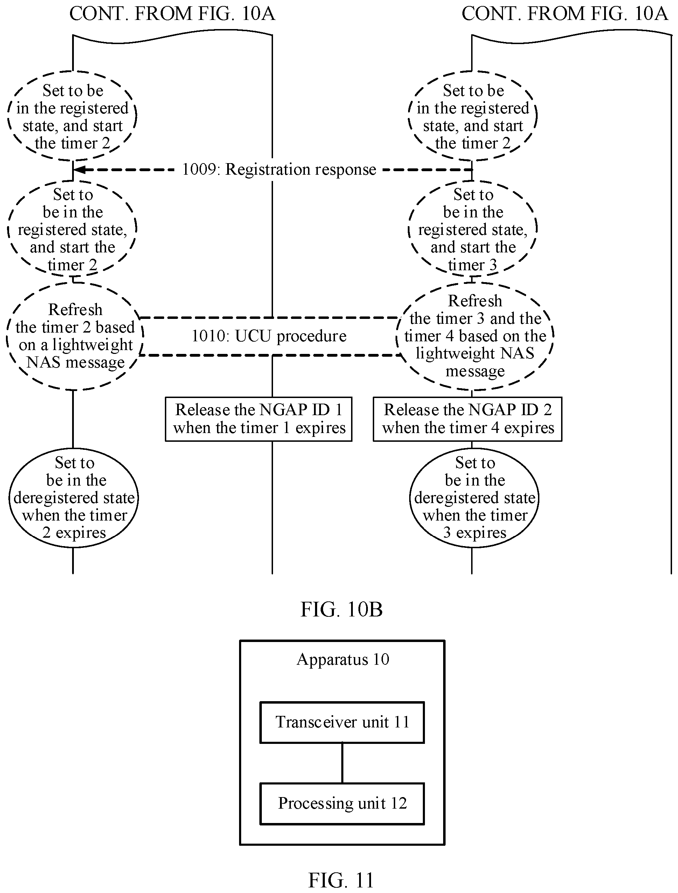

FIG. 10A and FIG. 10B are another example of a tag state change procedure according to an embodiment of this application.

Dashed lines in FIG. 10A and FIG. 10B represent optional steps. A tag is initially in a deregistered state.

Step 1001: An AF sends an inventory request to a TMF or an AMF.

Correspondingly, the TMF or the AMF receives the inventory request from the AF.

The inventory request may be an operation requirement on a tag such as quick inventory, inventory, reading, or writing. The inventory request may include tag identification information and information about a geographical area in which the tag is located. The tag identification information indicates a to-be-inventoried tag, and may be a TID, an EPC, or the like of the tag.

It should be noted that there may be one or more tags. For example, when inventory is performed on a tag, the tag identification information may be a TID or an EPC of the tag. For another example, when inventory is performed on a plurality of tags, the tag identification information may be a group of TIDs, a TID range, a group of EPCs, or an EPC range.

Step 1002: The TMF or the AMF determines, based on the information about a geographical area in which a tag is located, a base station to which the tag belongs.

Step 1003: The TMF or the AMF parses the inventory request, and delivers a corresponding inventory command to the base station based on a parsing result.

The inventory command may include the tag identification information. The tag identification information indicates a to-be-inventoried tag, and may be a TID, an EPC, or the like of the tag.

For example, when the inventory request is used to request to perform quick inventory, inventory, reading, or writing on the tag, the inventory command may be a quick inventory command, an inventory command, a read command, or a write command.

Step 1004: The base station sends selection information (or a select command) to the tag based on the received inventory command.

Correspondingly, the tag receives the selection information from the base station.

The selection information is used to select a to-be-inventoried tag.

In a possible implementation, a tag is selected by matching a storage area flag of the tag (for example, mask matching or determined value matching). In this case, the selection information may include a condition that needs to be met by a value of a corresponding storage area of the tag. A TID storage area is used as an example. The selection information may include a value or a value range of the TID storage area. In this case, a tag whose TID value is a value in the selection information or whose TID value is within a value range in the selection information is the to-be-inventoried tag.

Step 1005: The tag determines, based on the received selection information, that a requirement in the selection information is met, and starts a random access procedure.

For example, the selection information is used to select a tag whose TID values are 1 to 5. The tag whose TID values are 1 to 5 meets the requirement, and the random access procedure is started.

A specific implementation of the random access procedure is not limited in this application. In a possible implementation, the base station sends a query message to the tag; after receiving the query message, the tag returns a random number to the base station; and after receiving the random number from the tag, the base station returns an ACK message to the tag, where the ACK message may carry the random number sent by the tag. Random access by the tag may be implemented by using the message exchange process.

Descriptions are provided below by using an example in which a tag 1 successfully performs random access.

Step 1006: The tag 1 that successfully performs random access sends a registration request to the TMF or the AMF based on a lightweight NAS message.

Correspondingly, the TMF or the AMF receives the registration request from the tag 1.

The lightweight NAS message includes the registration request and an identifier of the tag 1. The identifier of the tag 1 may be a TID or an EPC of the tag 1, and the EPC is used as an example in FIG. 10A and FIG. 10B. For detailed descriptions of the lightweight NAS message, refer to the descriptions in FIG. 5.

Specifically, as shown in steps 1006a to 1006c in FIG. 10A, the tag 1 sends, to the TMF or the AMF through the base station, the lightweight NAS message that carries the registration request.

Step 1006a: The tag 1 sends the lightweight NAS message to the base station, and correspondingly, the base station receives the lightweight NAS message from the tag 1. Step 1006b: When the lightweight NAS message is transparently transmitted, the base station allocates an NGAP ID 1 to the EPC of the tag 1, and starts a timer 1. All messages transmitted by using the NGAP ID 1 during timing duration of the timer 1 are from the tag 1. In other words, the base station maintains the NGAP ID 1 based on the timer 1. Step 1006c: The base station sends, to the TMF or the AMF, the lightweight NAS message from the tag 1 by using the NGAP ID 1, and correspondingly, the TMF or the AMF receives the lightweight NAS message.

Optionally, the tag 1 sets a state of the tag 1 to a registered state based on the sent lightweight NAS message including the registration request, and starts a timer 2. The timer 2 is configured to maintain the registered state of the tag 1. To be specific, during running duration or timing duration of the timer 2, the tag 1 remains in the registered state. When the timer 2 expires or timing time of the timer 2 is up, the tag 1 no longer maintains the registered state, or the tag 1 enters the deregistered state.

Optionally, after receiving the registration request from the tag 1, the TMF or the AMF determines, based on the inventory request, that subsequently there is a command to be sent to the tag 1. In this case, the TMF or the AMF sets the state of the tag 1 maintained in the TMF or the AMF to the registered state, and starts a timer 3. The timer 3 is configured to maintain the registered state of the tag 1. To be specific, during running duration or timing duration of the timer 3, the state of the tag 1 maintained in the TMF or the AMF remains in the registered state. If the timer 3 expires or timing time of the timer 3 is up, the state of the tag 1 that is no longer maintained in the TMF or the AMF is the registered state, in other words, the TMF or the AMF sets the state of the tag 1 maintained in the TMF or the AMF to the deregistered state.

It should be noted that, that the base station allocates the NGAP ID 1 to the EPC of the tag 1 may alternatively be described as follows: The base station generates or starts an association between the EPC of the tag 1 and the NGAP ID 1, or the base station generates an association relationship or a correspondence between the EPC of the tag and the NGAP ID 1 and stores the association relationship or the correspondence.

Step 1007: The TMF or the AMF allocates an NGAP ID 2 to the ECP of the tag 1, and starts a timer 4.

During timing duration of the timer 4, the TMF or the AMF sends and receives a message of the tag 1 based on the NGAP ID 2. In other words, all messages transmitted by using the NGAP ID 2 are from the tag 1, or the TMF or the AMF maintains the NGAP ID 2 based on the timer 4.

Similarly, that the TMF or the AMF allocates the NGAP ID 2 to the EPC of the tag 1 may alternatively be described as follows: The TMF or the AMF generates or starts an association between the EPC of the tag 1 and the NGAP ID 2, or the TMF or the AMF generates an association relationship between the EPC of the tag and the NGAP ID 2 and stores the association relationship.

It should be noted that the timer 3 or the timer 4 may be a same timer, or may be different timers. This is not limited in this application. In addition, in this application, an initial value of the timer 1, the timer 2, the timer 3, or the timer 4 may be set based on a capability of the tag 1. During exchange between the tag 1 and the TMF or the AMF, the timer 1, the timer 2, the timer 3, or the timer 4 does not need to be refreshed. Alternatively, the timer 1, the timer 2, the timer 3, or the timer 4 may be refreshed based on an exchange message between the tag 1 and the TMF or the AMF (for example, an authentication-related lightweight NAS message or a lightweight NAS message in a UCU procedure in the following).

Step 1008: If authentication needs to be performed on a tag type of the tag 1, an authentication procedure for the tag 1 may be performed after the registration request is sent to the TMF or the AMF.

Whether the tag 1 is valid may be determined by using the authentication procedure. In the authentication procedure for the tag 1, an authentication-related lightweight NAS message is exchanged between the tag 1 and the TMF or the AMF, and between the TMF or the AMF and the AF.

Optionally, if the state of the tag 1 is already the registered state, the timer 1, the timer 2, the timer 3, or the timer 4 may be refreshed based on the authentication-related lightweight NAS message.

Optionally, the tag 1 may alternatively set the state of the tag 1 to the registered state based on the authentication-related lightweight NAS message, and start the timer 2. For descriptions of the timer 2, refer to the foregoing descriptions. Details are not described herein again. For example, when the tag 1 receives an authentication accept sent by the TMF or the AMF by using the lightweight NAS message, the tag 1 changes the state of the tag 1 from the deregistered state to the registered state, and starts the timer 2.

Optionally, after sending the authentication-related lightweight NAS message to the tag 1, the TMF or the AMF may set the state of the tag 1 maintained in the TMF or the AMF to the registered state, and starts the timer 3. For descriptions of the timer 3, refer to the foregoing descriptions. Details are not described herein again. For example, after sending the authentication accept to the tag 1 by using the lightweight NAS message, the TMF or the AMF sets the state of the tag 1 maintained in the TMF or the AMF to the registered state, and starts the timer 3.

Step 1008 is an optional step.

Step 1009: After receiving the registration request from the tag 1, the TMF or the AMF may send a registration response (for example, a registration accept) to the tag 1 by using the lightweight NAS message.

Correspondingly, the tag 1 receives the registration response from the TMF or the AMF.

Optionally, if the state of the tag 1 is already the registered state, the timer 1, the timer 2, the timer 3, or the timer 4 may be refreshed based on the lightweight NAS message that carries the registration response.

Optionally, the tag 1 may alternatively set the state of the tag 1 to the registered state based on the lightweight NAS message that carries the registration response, and starts the timer 2. For descriptions of the timer 2, refer to the foregoing descriptions. Details are not described herein again. For example, when the tag 1 receives the registration accept sent by the TMF or the AMF by using the lightweight NAS message, the tag 1 changes the state of the tag 1 from the deregistered state to the registered state, and starts the timer 2.

Optionally, after sending the registration response to the tag 1 by using the lightweight NAS message, the TMF or the AMF may set the state of the tag 1 maintained in the TMF or the AMF to the registered state, and starts the timer 3. For descriptions of the timer 3, refer to the foregoing descriptions. Details are not described herein again. For example, after sending the registration accept to the tag 1 by using the lightweight NAS message, the TMF or the AMF sets the state of the tag 1 maintained in the TMF or the AMF to the registered state, and starts the timer 3.

Step 1009 is an optional step.

Step 1010: The tag 1 and the TMF or the AMF perform a UCU procedure.

Specifically, after both the state of the tag 1 on a tag 1 side and the state of the tag 1 on an AMF side or an AMF side are the registered state, the TMF or the AMF sends a UCU command to the tag 1 by using the lightweight NAS message; and after receiving the UCU command from the TMF or the AMF, the tag 1 sends a reply to the UCU command to the TMF or the AMF by using the lightweight NAS message. The UCU command may be an inventory command, a read command, a write command, a kill command, or the like.

Optionally, the timer 1, the timer 2, the timer 3, or the timer 4 may be refreshed based on the lightweight NAS message in the UCU procedure.

Step 1010 is an optional step.

Subsequently, when the timer 1 expires, the base station releases the NGAP ID 1. When the timer 2 expires, the tag 1 sets the state of the tag 1 to the deregistered state. When the timer 3 expires, the TMF or the AMF sets the state of the tag 1 maintained in the TMF or the AMF to the deregistered state. When the timer 4 expires, the TMF or the AMF releases the NGAP ID 2.

It should be noted that, that the base station releases the NGAP ID 1 may alternatively be described as follows: The base station releases the association between the EPC of the tag 1 and the NGAP ID 1, or the base station deletes the association relationship between the EPC of the tag 1 and the NGAP ID 1, or the base station performs local deregistration on the tag 1. Similarly, that the TMF or the AMF releases the NGAP ID 2 may alternatively be described as follows: The TMF or the AMF releases the association between the EPC of the tag 1 and the NGAP ID 2, or the TMF or the AMF deletes the association relationship between the EPC of the tag 1 and the NGAP ID 2, or the TMF or the AMF performs local deregistration on the tag 1.

In addition, it should be further noted that, when the inventory command delivered by the TMF or the AMF to the base station is a quick inventory command, message exchange does not need to be performed between the tag and the TMF or the AMF, and the base station collects and feeds back the EPC of the tag in a unified manner. In this case, the state of the tag does not need to be changed on the tag and the TMF or the AMF.

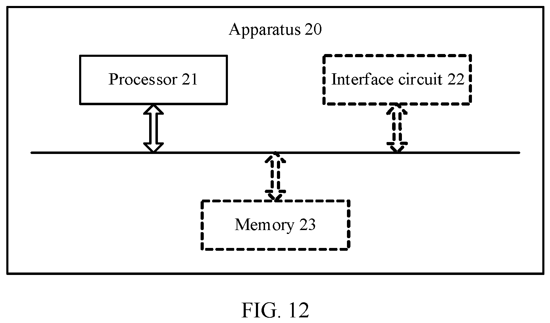

The method provided in this application is described in detail above with reference to FIG. 4 to FIG. 10A and FIG. 10B. Apparatus embodiments of this application are described in detail below with reference to FIG. 11 and FIG. 12.

It may be understood that, to implement functions in the foregoing embodiments, an apparatus in FIG. 11 or FIG. 12 includes a corresponding hardware structure and/or software module for performing each function. A person skilled in the art should be easily aware that, with reference to the units and the method steps in the examples described in embodiments disclosed in this application, this application can be implemented by hardware or a combination of hardware and computer software.

FIG. 11 and FIG. 12 are diagrams of structures of possible apparatuses according to embodiments of this application. These apparatuses may be configured to implement functions of the first tag, the core network device, or the access network device in the foregoing method embodiments, and therefore can also implement beneficial effects of the foregoing method embodiments.

As shown in FIG. 11, an apparatus 10 includes a transceiver unit 11 and a processing unit 12.

When the apparatus 10 is configured to implement a function of the first tag in the foregoing method embodiments, the transceiver unit 11 is configured to receive a first message from an access network device, where the first message is used to request to inventory a to-be-inventoried tag, and the first tag belongs to the to-be-inventoried tag. The transceiver unit 11 and/or the processing unit 12 are/is configured to access the access network device. The transceiver unit 11 is further configured to send a second message, where the second message is used to request registration with a core network device. The processing unit 12 is further configured to switch the first tag from a deregistered state to a registered state after the second message is sent.

Optionally, the first message is further used to excite the to-be-inventoried tag.

Optionally, after the first tag sends the second message, the transceiver unit 11 is further configured to receive a third message, where the third message indicates that the first tag is successfully registered with the core network device; and the processing unit 12 is specifically configured to switch the first tag from the deregistered state to the registered state after the third message is received.

Optionally, after the first tag sends the second message, the transceiver unit 11 is further configured to: send a fourth message, where the fourth message is used to request to perform authentication on the first tag; and receive a fifth message, where the fifth message indicates that the authentication on the first tag succeeds; and the processing unit 12 is specifically configured to switch the first tag from the deregistered state to the registered state after the fifth message is received.

Optionally, after the first tag sends the second message, the transceiver unit 11 is further configured to: receive a sixth message, where the sixth message is used to request the first tag to perform authentication on an authentication server; and send a seventh message when the authentication on the authentication server succeeds, where the seventh message indicates that the authentication on the authentication server succeeds; and the processing unit 12 is specifically configured to switch the first tag from the deregistered state to the registered state after the seventh message is sent.

Optionally, the processing unit 12 is further configured to: start a first timer; and change the first tag from the registered state to the deregistered state when the first timer expires.

Optionally, the processing unit 12 is further configured to reset the first timer based on a message between the first tag and the core network device.

Optionally, the transceiver unit 11 is further configured to receive an eighth message, where the eighth message indicates to inventory a next tag; and the processing unit 12 is further configured to switch the first tag from the registered state to the deregistered state based on the eighth message.

When the apparatus 10 is configured to implement a function of the core network device in the foregoing method embodiments, the transceiver unit 11 is configured to: receive a first request message used to request to inventory a to-be-inventoried tag; send, through an access network device, a first message to the to-be-inventoried tag, where the first message is used to request to inventory the to-be-inventoried tag; and receive a second message from a first tag in the to-be-inventoried tag, where the second message is used to request registration with the core network device, and the first tag is a passive tag or a semi-passive tag. The processing unit 12 is configured to: after the second message is received, switch a state of the first tag stored in the core network device from a deregistered state to a registered state.

Optionally, after receiving the second message, the transceiver unit 11 is further configured to send a third message to the first tag, where the third message indicates that the first tag is successfully registered with the core network device; and the processing unit 12 is specifically configured to: after the third message is sent, switch the state of the first tag stored in the core network device from the deregistered state to the registered state.

Optionally, after receiving the second message, the transceiver unit 11 is further configured to: receive a fourth message from the first tag, where the fourth message is used to request to perform authentication on the first tag; and send a fifth message to the first tag, where the fifth message indicates that the authentication on the first tag succeeds. The processing unit 12 is specifically configured to: after the fifth message is sent, switch the state of the first tag stored in the core network device from the deregistered state to the registered state.

Optionally, after receiving the second message, the transceiver unit 11 is further configured to: send a sixth message to the first tag, where the sixth message is used to request to perform authentication on an authentication server; and receive a seventh message from the first tag, where the seventh message indicates that the authentication on the authentication server succeeds. The processing unit 12 is specifically configured to: after the seventh message is received, switch the state of the first tag stored in the core network device from the deregistered state to the registered state.

Optionally, the processing unit 12 is further configured to: start a second timer when the state of the first tag is switched from the deregistered state to the registered state; and switch, when the second timer expires, the state of the first tag stored in the core network device from the registered state to the deregistered state.

Optionally, the processing unit 12 is further configured to reset the second timer based on a message between the first tag and the core network device.

Optionally, the processing unit 12 is configured to: when inventory on the first tag ends, switch the state of the first tag stored in the core network device from the registered state to the deregistered state.

Optionally, the transceiver unit 11 is further configured to send a ninth message to the access network device, where the ninth message indicates that the inventory on the first tag ends.

Optionally, the processing unit 12 is further configured to allocate a first identifier to the first tag after the second message is received. The transceiver unit 11 is further configured to send a correspondence between the first identifier and the first tag to the access network device.

Optionally, the transceiver unit 11 is further configured to receive a correspondence between a second identifier from the access network device and the first tag.

Optionally, the processing unit 12 is further configured to: when the state of the first tag is switched from the registered state to the deregistered state, release the correspondence between the first identifier and the first tag and/or the correspondence between the second identifier and the first tag.

When the apparatus 10 is configured to implement a function of the access network device in the foregoing method embodiments, the transceiver unit 11 is configured to: receive a second request message used to request to inventory a to-be-inventoried tag; send a first message to the to-be-inventoried tag based on the second request message, where the first message is used to request to inventory the to-be-inventoried tag; receive a second message from a first tag after the first tag in the to-be-inventoried tag accesses the access network device, where the second message is used to request registration with the core network device; and send the second message to the core network device.

Optionally, the first message is further used to excite the to-be-inventoried tag.

Optionally, the processing unit 12 is configured to allocate a second identifier to the first tag based on the second message; and the transceiver unit 11 is further configured to send a correspondence between the second identifier and the first tag to the core network device; and/or the transceiver unit 11 is further configured to receive a correspondence between a first identifier from the core network device and the first tag.

Optionally, the processing unit 12 is further configured to: start a third timer; and when the third timer expires, release the correspondence between the first identifier and the first tag and/or the correspondence between the second identifier and the first tag.

Optionally, the processing unit 12 is further configured to reset the third timer based on a message between the first tag and the core network device.

Optionally, the transceiver unit 11 is further configured to receive a ninth message from the core network device, where the ninth message indicates that the inventory on the first tag ends; and the processing unit 12 is further configured to release, based on the ninth message, the correspondence between the first identifier and the first tag and/or the correspondence between the second identifier and the first tag.

Optionally, the transceiver unit 11 is further configured to send an eighth message to the first tag, where the eighth message indicates to inventory a next tag.

In another implementation, when the apparatus 10 is configured to implement a function of the first tag in the foregoing method embodiments, the transceiver unit 11 is configured to receive a first message from an access network device, where the first message is used to request to inventory a to-be-inventoried tag, and the first tag belongs to the to-be-inventoried tag. The transceiver unit 11 and/or the processing unit 12 are/is configured to access the access network device. The transceiver unit 11 is further configured to: receive a quick inventory command from the access network device; and send an identifier of the first tag to the access network device based on the quick inventory command.

Optionally, the first message is further used to excite the to-be-inventoried tag.

In another implementation, when the apparatus 10 is configured to implement a function of the core network device in the foregoing method embodiments, the transceiver unit 11 is configured to: receive a third request message used to request to perform quick inventory on a to-be-inventoried tag, where the to-be-inventoried tag includes a first tag; send, to an access network device, a fourth request message used to request to perform quick inventory on the to-be-inventoried tag; receive an identifier of the first tag from the access network device; and send the identifier of the first tag to an application function network element.

In another implementation, when the apparatus 10 is configured to implement a function of the access network device in the foregoing method embodiments, the transceiver unit 11 is configured to: receive a fourth request message used to request to perform quick inventory on a to-be-inventoried tag; send, based on the fourth request message, a first message to the to-be-inventoried tag, where the first message is used to request to inventory the to-be-inventoried tag; send a quick inventory command to a first tag after the first tag in the to-be-inventoried tag accesses the access network device; receive an identifier of the first tag from the first tag; and send the identifier of the first tag to the core network device.

Optionally, the first message is further used to excite the to-be-inventoried tag.

For more detailed descriptions of the transceiver unit 11 and the processing unit 12, refer to related descriptions in the foregoing method embodiments. Details are not described herein again.

As shown in FIG. 12, an apparatus 20 includes a processor 21. The processor 21 is coupled to a memory 23, and the memory 23 is configured to store instructions. When the apparatus 20 is configured to implement the foregoing method, the processor 21 is configured to execute the instructions in the memory 23, to implement a function of the foregoing processing unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing method, the processor 21 is configured to execute the instructions to implement the function of the foregoing processing unit 12, and the interface circuit 22 is configured to implement a function of the foregoing transceiver unit 11.

For example, when the apparatus 20 is a chip used in the first tag, the core network device, or the access network device, the chip implements a function of the first tag, the core network device, or the access network device in the foregoing method embodiments. The chip receives information from the first tag, the core network device, or another module (for example, a radio frequency module or an antenna) in the access network device, where the information is sent by another apparatus to the first tag, the core network device, or the access network device. Alternatively, the chip sends information to the first tag, the core network device, or another module (for example, a radio frequency module or an antenna) in the access network device, where the information is sent by the first tag, the core network device, or the access network device to the another apparatus.

This application further provides a communication apparatus, including a processor. The processor is coupled to a memory. The memory is configured to store a computer program or instructions and/or data. The processor is configured to: execute the computer program or the instructions stored in the memory, or read the data stored in the memory, to perform the method in the foregoing method embodiments. Optionally, there are one or more processors. Optionally, the communication apparatus includes the memory. Optionally, there are one or more memories. Optionally, the memory and the processor are integrated together or disposed separately.

This application further provides a computer-readable storage medium. The computer-readable storage medium stores computer instructions used to implement the method performed by the first tag, the core network device, or the access network device in the foregoing method embodiments.

This application further provides a computer program product including instructions. The instructions are executed by a computer, so that the method performed by the first tag, the core network device, or the access network device in the foregoing method embodiments is implemented.

This application further provides a communication system. The communication system includes at least one of the first tag, the core network device, or the access network device in the foregoing embodiments.

For explanations and beneficial effects of related content of any one of the apparatuses provided above, refer to the corresponding method embodiments provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware device, or any combination thereof. The general-purpose processor may be a microprocessor or any regular processor or the like.

The method steps in embodiments of this application may be implemented by hardware, or may be implemented by the processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in the first tag, the core network device, or the access network device. Certainly, the processor and the storage medium may alternatively exist as discrete components in the first tag, the core network device, or the access network device.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

**In** embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A tag state management method, comprising:
receiving, by a first tag, a first message from an access network device, wherein the first message is used to request to inventory a to-be-inventoried tag, and the first tag belongs to the to-be-inventoried tag;
accessing, by the first tag, the access network device;
sending, by the first tag, a second message, wherein the second message is used to request registration with a core network device; and
switching, by the first tag, from a deregistered state to a registered state after sending the second message.

2. The method according to claim 1, wherein the first message is further used to excite the to-be-inventoried tag.

3. The method according to claim 1 or 2, wherein after the sending, by the first tag, a second message, the method further comprises:
receiving, by the first tag, a third message, wherein the third message indicates that the first tag is successfully registered with the core network device; and
the switching, by the first tag, from a deregistered state to a registered state after sending the second message comprises:
switching, by the first tag, from the deregistered state to the registered state after receiving the third message.

4. The method according to claim 1 or 2, wherein after the sending, by the first tag, a second message, the method further comprises:
sending, by the first tag, a fourth message, wherein the fourth message is used to request to perform authentication on the first tag; and
receiving, by the first tag, a fifth message, wherein the fifth message indicates that the authentication on the first tag succeeds; and
the switching, by the first tag, from a deregistered state to a registered state after sending the second message comprises:
switching, by the first tag, from the deregistered state to the registered state after receiving the fifth message.

5. The method according to claim 1 or 2, wherein after the sending, by the first tag, a second message, the method further comprises:
receiving, by the first tag, a sixth message, wherein the sixth message is used to request the first tag to perform authentication on an authentication server; and
sending, by the first tag, a seventh message when the authentication on the authentication server succeeds, wherein the seventh message indicates that the authentication on the authentication server succeeds; and
the switching, by the first tag, from a deregistered state to a registered state after sending the second message comprises:
switching, by the first tag, from the deregistered state to the registered state after sending the seventh message.

6. The method according to any one of claims 1 to 5, wherein the method further comprises:
starting, by the first tag, a first timer; and
switching, by the first tag, from the registered state to the deregistered state when the first timer expires.

7. The method according to claim 6, wherein the method further comprises:
resetting, by the first tag in the registered state, the first timer based on a message between the first tag and the core network device.

8. The method according to any one of claims 1 to 5, wherein the method further comprises:
receiving, by the first tag in the registered state, an eighth message, wherein the eighth message indicates to inventory a next tag; and
switching, by the first tag, from the registered state to the deregistered state based on the eighth message.

9. A tag state management method, comprising:
receiving, by a core network device, a first request message used to request to inventory a to-be-inventoried tag;
sending, by the core network device through an access network device, a first message to the to-be-inventoried tag, wherein the first message is used to request to inventory the to-be-inventoried tag;
receiving, by the core network device, a second message from a first tag in the to-be-inventoried tag, wherein the second message is used to request registration with the core network device, and the first tag is a passive tag or a semi-passive tag; and
switching, by the core network device after receiving the second message, a state of the first tag stored in the core network device from a deregistered state to a registered state.

10. The method according to claim 9, wherein after the second message is received, the method further comprises:
sending, by the core network device, a third message to the first tag, wherein the third message indicates that the first tag is successfully registered with the core network device; and
the switching, by the core network device after receiving the second message, a state of the first tag stored in the core network device from a deregistered state to a registered state comprises:
switching, by the core network device after sending the third message, the state of the first tag stored in the core network device from the deregistered state to the registered state.

11. The method according to claim 9, wherein after the second message is received, the method further comprises:
receiving, by the core network device, a fourth message from the first tag, wherein the fourth message is used to request to perform authentication on the first tag; and
sending, by the core network device, a fifth message to the first tag, wherein the fifth message indicates that the authentication on the first tag succeeds; and
the switching, by the core network device after receiving the second message, a state of the first tag stored in the core network device from a deregistered state to a registered state comprises:
switching, by the core network device after sending the fifth message, the state of the first tag stored in the core network device from the deregistered state to the registered state.

12. The method according to claim 9, wherein after the second message is received, the method further comprises:
sending, by the core network device, a sixth message to the first tag, wherein the sixth message is used to request to perform authentication on an authentication server; and
receiving, by the core network device, a seventh message from the first tag, wherein the seventh message indicates that the authentication on the authentication server succeeds; and
the switching, by the core network device after receiving the second message, a state of the first tag stored in the core network device from a deregistered state to a registered state comprises:
switching, by the core network device after receiving the seventh message, the state of the first tag stored in the core network device from the deregistered state to the registered state.

13. The method according to any one of claims 9 to 12, wherein the method further comprises:
starting, by the core network device, a second timer when the state of the first tag is switched from the deregistered state to the registered state; and
when the second timer expires, switching, by the core network device, the state of the first tag stored in the core network device from the registered state to the deregistered state.

14. The method according to claim 13, wherein the method further comprises:
resetting, by the core network device, the second timer based on a message between the first tag and the core network device.

15. The method according to any one of claims 9 to 12, wherein the method further comprises:
when inventory on the first tag ends, switching, by the core network device, the state of the first tag stored in the core network device from the registered state to the deregistered state.

16. The method according to any one of claims 13 to 15, wherein the method further comprises:
sending, by the core network device, a ninth message to the access network device, wherein the ninth message indicates that the inventory on the first tag ends.

17. The method according to any one of claims 13 to 16, wherein the method further comprises:
allocating, by the core network device, a first identifier to the first tag after receiving the second message; and
sending, by the core network device, a correspondence between the first identifier and the first tag to the access network device.

18. The method according to any one of claims 13 to 17, wherein the method further comprises:
receiving, by the core network device, a correspondence between a second identifier from the access network device and the first tag.

19. The method according to claim 17 or 18, wherein the method further comprises:
when the state of the first tag is switched from the registered state to the deregistered state, releasing, by the core network device, the correspondence between the first identifier and the first tag and/or the correspondence between the second identifier and the first tag.

20. A tag state management method, comprising:
receiving, by an access network device, a second request message used to request to inventory a to-be-inventoried tag, wherein the to-be-inventoried tag comprises a first tag;
sending, by the access network device, a first message to the to-be-inventoried tag based on the second request message, wherein the first message is used to request to inventory the to-be-inventoried tag;
after the first tag in the to-be-inventoried tag accesses the access network device, receiving, by the access network device, a second message from the first tag, wherein the second message is used to request registration with a core network device; and
sending, by the access network device, the second message to the core network device.

21. The method according to claim 20, wherein the first message is further used to excite the to-be-inventoried tag.

22. The method according to claim 20 or 21, wherein the method further comprises:
allocating, by the access network device, a second identifier to the first tag based on the second message; and sending, by the access network device, a correspondence between the second identifier and the first tag to the core network device; and/or
receiving, by the access network device, a correspondence between a first identifier from the core network device and the first tag.

23. The method according to claim 22, wherein the method further comprises:
starting, by the access network device, a third timer; and
when the third timer expires, releasing, by the access network device, the correspondence between the first identifier and the first tag and/or the correspondence between the second identifier and the first tag.

24. The method according to claim 23, wherein the method further comprises:
resetting, by the access network device, the third timer based on a message between the first tag and the core network device.

25. The method according to claim 22, wherein the method further comprises:
receiving, by the access network device, a ninth message from the core network device, wherein the ninth message indicates that the inventory on the first tag ends; and
releasing, by the access network device based on the ninth message, the correspondence between the first identifier and the first tag and/or the correspondence between the second identifier and the first tag.

26. The method according to any one of claims 23 to 25, wherein the method further comprises:
sending, by the access network device, an eighth message to the first tag, wherein the eighth message indicates to inventory a next tag.

27. A tag state management method, comprising:
receiving, by a core network device, a first request message used to request to inventory a to-be-inventoried tag;
sending, by the core network device to the access network device, a second request message used to request to inventory the to-be-inventoried tag;
sending, by the access network device, a first message to the to-be-inventoried tag based on the second request message, wherein the first message is used to request to inventory the to-be-inventoried tag;
after a first tag in the to-be-inventoried tag accesses the access network device, receiving, by the access network device, a second message from the first tag, wherein the second message is used to request registration with the core network device;
sending, by the access network device, the second message to the core network device; and
switching, by the core network device after receiving the second message, a state of the first tag stored in the core network device from a deregistered state to a registered state.

28. The method according to claim 27, wherein after the second message is received, the method further comprises:
sending, by the core network device, a third message to the first tag through the access network device, wherein the third message indicates that the first tag is successfully registered with the core network device; and
the switching, by the core network device after receiving the second message, a state of the first tag stored in the core network device from a deregistered state to a registered state comprises:
switching, by the core network device after sending the third message, the state of the first tag stored in the core network device from the deregistered state to the registered state.

29. The method according to claim 27, wherein after the second message is received, the method further comprises:
receiving, by the core network device, a fourth message from the first tag, wherein the fourth message is used to request to perform authentication on the first tag; and
sending, by the core network device, a fifth message to the first tag, wherein the fifth message indicates that the authentication on the first tag succeeds; and
the switching, by the core network device after receiving the second message, a state of the first tag stored in the core network device from a deregistered state to a registered state comprises:
switching, by the core network device after sending the fifth message, the state of the first tag stored in the core network device from the deregistered state to the registered state.

30. The method according to claim 27, wherein after the second message is received, the method further comprises:
sending, by the core network device, a sixth message to the first tag, wherein the sixth message is used to request to perform authentication on an authentication server; and
receiving, by the core network device, a seventh message from the first tag, wherein the seventh message indicates that the authentication on the authentication server succeeds; and
the switching, by the core network device after receiving the second message, a state of the first tag stored in the core network device from a deregistered state to a registered state comprises:
switching, by the core network device after receiving the seventh message, the state of the first tag stored in the core network device from the deregistered state to the registered state.

31. The method according to any one of claims 27 to 30, wherein the method further comprises:
when inventory on the first tag ends, switching, by the core network device, the state of the first tag stored in the core network device from the registered state to the deregistered state.

32. A communication system, comprising at least one of the following devices:
a first tag configured to perform the method according to any one of claims 1 to 8;
a core network device configured to perform the method according to any one of claims 9 to 19; or
an access network device configured to perform the method according to any one of claims 20 to 26.

33. A communication apparatus, comprising:
a processor, configured to execute a computer program stored in a memory, to enable the apparatus to perform the method according to any one of claims 1 to 8, the method according to any one of claims 9 to 19, or the method according to any one of claims 20 to 26.

34. The apparatus according to claim 33, wherein the apparatus further comprises the memory.

35. A computer-readable storage medium, wherein the computer-readable storage medium stores a computer program; and when the computer program is run on a computer, the computer is enabled to perform the method according to any one of claims 1 to 8, the method according to any one of claims 9 to 19, or the method according to any one of claims 20 to 26.

36. A computer program product, wherein the computer program product comprises instructions for performing the method according to any one of claims 1 to 8, instructions for performing the method according to any one of claims 9 to 19, or instructions for performing the method according to any one of claims 20 to 26.

37. A chip, wherein the chip comprises a processor and a communication interface, and the processor reads, through the communication interface, instructions stored in a memory, to perform the method according to any one of claims 1 to 31.
